# EUROPEAN PATENT SPECIFICATION

(11) **EP 4 073 996 B1**
(45) Date of publication and mention of the grant of the patent: **20.03.2024**
(21) Application number: 20820588.0
(22) Date of filing: 01.12.2020
(51) Int. Cl.: H04W 12/08, H04W 12/04, H04W 36/00, H04W 12/106, H04W 12/122

(54) **USER EQUIPMENT, NETWORK NODE AND METHODS IN A WIRELESS COMMUNICATIONS NETWORK**
BENUTZERAUSRÜSTUNG, NETZWERKKNOTEN UND VERFAHREN IN EINEM DRAHTLOSKOMMUNIKATIONSNETZWERK
ÉQUIPEMENT UTILISATEUR, NOEUD DE RÉSEAU, ET PROCÉDÉS DANS UN RÉSEAU DE COMMUNICATIONS SANS FIL

(30) Priority: 09.12.2019 US 201962945258 P
(43) Date of publication of application: 19.10.2022
(73) Proprietor: TELEFONAKTIEBOLAGET LM ERICSSON (PUBL), 164 83 Stockholm (SE)
(72) Inventor: WALLENTIN, Pontus, 582 39 LINKÖPING (SE); RUNE, Johan, 181 29 LIDINGÖ (SE); DA SILVA, Icaro L. J., 170 77 SOLNA (SE)
(74) Representative: Ericsson
(86) International application number: PCT/SE2020/051148
(87) International publication number: WO 2021/118430

(56) References cited:
- WO-A1-2018/230974
- US-A1- 2018 049 261
- ERICSSON: "Lower-layer mobility enhancements", 3GPP DRAFT; R1-1902528 LOWER-LAYER MOBILITY ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20190225 - 20190301 15 February 2019 (2019-02-15), XP051600224, Retrieved from the Internet: URL:http://www.3gpp.org/ftp/tsg%5Fran/WG1% 5FRL1/TSGR1%5F96/Docs/R1%2D1902528%2Ezip [retrieved on 2019-02-15] cited in the application
- "5G; NR; Radio Resource Control (RRC); Protocol specification (3GPP TS 38.331 version 15.7.0 Release 15)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP RAN, no. V15.7.0 15 October 2019 (2019-10-15), pages 1-523, XP014356038, Retrieved from the Internet: URL:http://www.etsi.org/deliver/etsi_ts/13 8300_138399/138331/15.07.00_60/ts_138331v1 50700p.pdf [retrieved on 2019-10-15]

## Description

### TECHNICAL FIELD

Embodiments herein relate to a User Equipment (UE), a network node and methods therein. In some aspects, they relate to handling authorization in relation to a mobility procedure in a wireless communications network.

Embodiments herein further relates to computer programs and carriers corresponding to the above UE, network node and methods.

### BACKGROUND

In a typical wireless communication network, wireless devices, also known as wireless communication devices, mobile stations, stations (STA) and/or User Equipment (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

### Mobility in 3GPP 5G NR Release-15

Early during the 3GPP Release-15 standardization, it was agreed that NR would support two types of mobility:
- Mobility without Radio Resource Control (RRC) involvement (intra-cell);
- Mobility with RRC involvement (inter-cell);

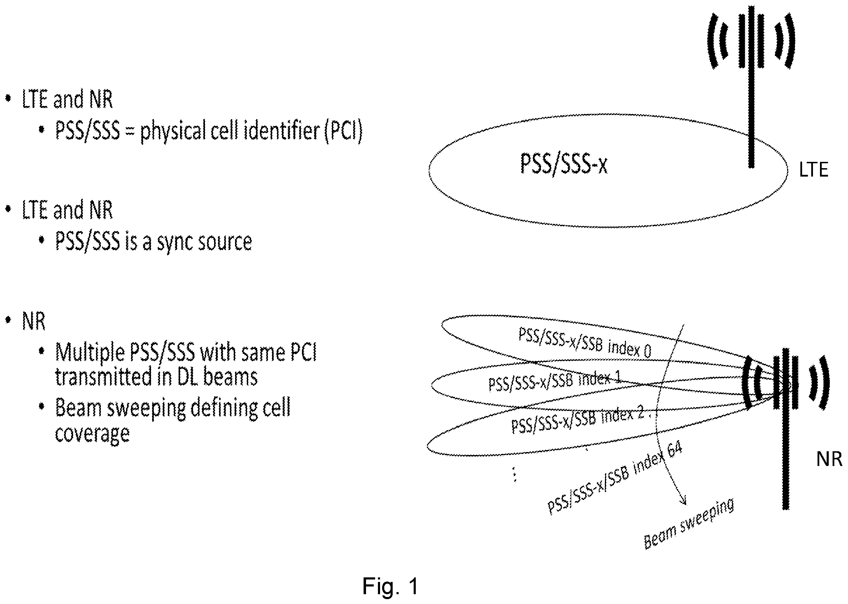

**Mobility with RRC involvement** is quite similar to the LTE mobility functionality: it is based on event-driven measurement reporting over RRC, where the UE performs measurement on various reference signals (mapping to cells) and filters these measurements. When the filtered measurements fulfil certain criteria parametrized by the NW, the UE will trigger a measurement report. However, differently from LTE a cell may be defined by multiple beams, which may be realized by multiple SS/PBCH Blocks (SSB)s transmitted in different directional beams, while in LTE a single broadcasted signal is transmitted, as shown in **Figure 1** which depicts differences between cell definition in NR and LTE.

That leads to a procedure where changing beams from different cells require RRC signaling and a set of UE protocols actions e.g. reset of buffers, etc.

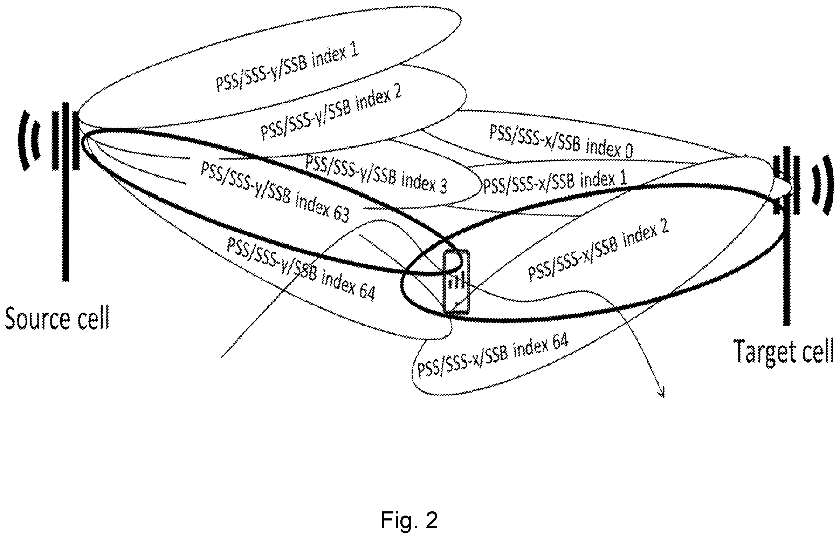

**Figure 2** depicts Inter-cell inter-node beam changing, handover realized with RRC signaling in 3GPP Release -15.

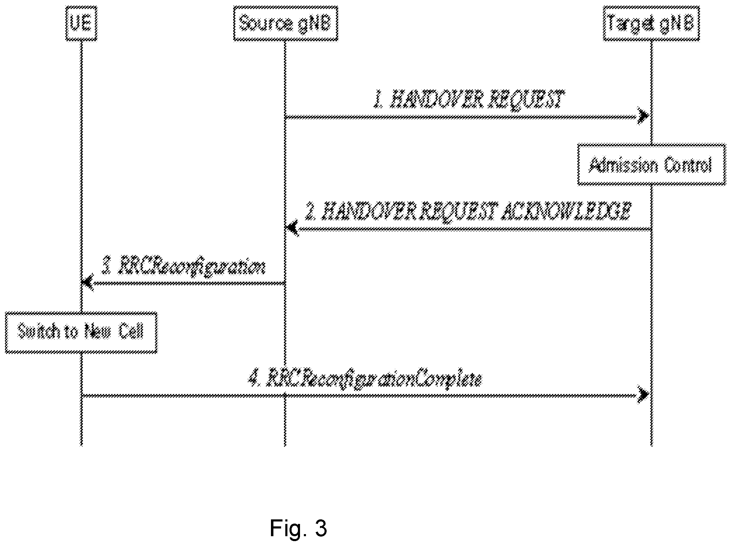

According to 3GPP TS 38.300, for inter-gNB handover, inter-cell and inter-node mobility, the signaling procedures consist of at least the following elemental components illustrated in **Figure 3** depicting Inter-gNB handover procedures.
1. The source gNB initiates handover and issues a HANDOVER REQUEST over the Xn interface. This is possibly based on measurement reports, which may have been configured when the UE enters Connected state.
2. The target gNB performs admission control and provides the new RRC configuration as part of the HANDOVER REQUEST ACKNOWLEDGE.
3. The source gNB provides the RRC configuration to the UE by forwarding the RRCReconfiguration message received in the HANDOVER REQUEST ACKNOWLEDGE. The RRCReconfiguration message includes at least cell ID and all information required to access the target cell so that the UE can access the target cell without reading system information. For some cases, the information required for contention-based and contention-free random access can be included in the RRCReconfiguration message. The access information to the target cell may include beam specific information, if any.
4. The UE moves the RRC connection to the target gNB and replies with the RRCReconfigurationComplete.

NOTE: User Data can also be sent in step 4 if the grant allows.

The handover mechanism triggered by RRC requires the UE at least to reset an MAC entity and re-establish Radio Link Control RLC. RRC managed handovers with and without Packet Data Convergence Protocol (PDCP) entity re-establishment are both supported. For Data Radio Bearer (DRB) using RLC Acknowledged mode (AM) mode, PDCP may either be re-established together with a security key change or initiate a data recovery procedure without a key change. For DRBs using RLC Unacknowledged Mode (UM);.mode and for Signaling Radio Bearers (SRBs), PDCP may either be re-established together with a security key change or remain as it is without a key change. Data forwarding, in-sequence delivery and duplication avoidance at handover can be guaranteed when the target gNB uses the same DRB configuration as the source gNB. Timer based handover failure procedure is supported in NR. RRC connection re-establishment procedure is used for recovering from handover failure.

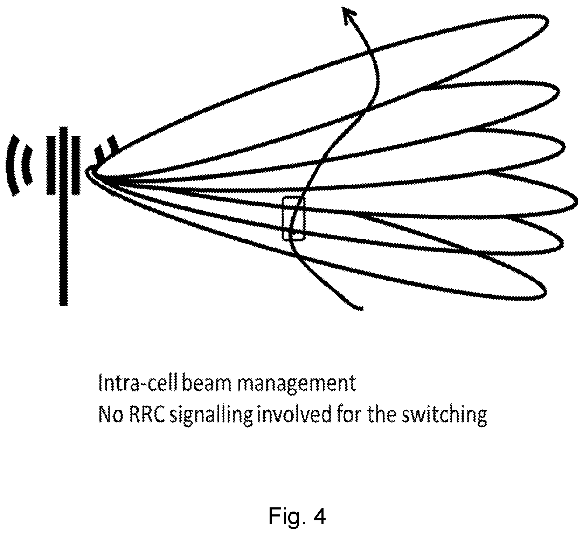

**Mobility without RRC involvement** is also known as beam management. It was designed for a situation where multiple beams cover one cell. Due to the smaller coverage area of these narrow beams, it could be anticipated that a UE would change beam more frequently than it changes cells. To reduce the signaling load for the beam switches, it was decided that RRC signaling would not be required to facilitate such changes. Instead, signaling solution based on Multiple Access Control protocol (MAC) Control Element (CE) or Downlink Control. Information (DCI) have been introduced for beam management / intra-cell mobility. This is illustrated in **Figure 4** depicting Beam switching within the same cell.

Three examples of sub-functionality to support beam management are the following:
- Layer 1 (L1)- Reference Signal Received Power (RSRP) reporting on SSB and Channel-State Information - Reference Signal (CSI-RS);
- MAC CE based activation/deactivation updates of beam indications, so-called Quasi-Co-Location (QCL) source, explained in the following in more details);
- Beam failure recovery / radio link monitoring / beam failure detection.

As these functionalities were designed to handle mobility without RRC involvement, they were limited to intra-cell operations. In the following, we provide some background about some existing fundamental concepts in the 5G NR L1 specifications: Beam indications, Quasi-Co-Location (QCL) source and Transmission Configuration Indication (TCI) states.

### Beam indications, QCL source and TCI states

Several signals can be transmitted from the same base station antenna from different antenna ports. These signals can have the same large-scale properties, for instance in terms of Doppler shift/spread, average delay spread, or average delay, when measured at the receiver. These antenna ports are then said to be QCL.

The network can then signal to the UE that two antenna ports are QCL so that the UE interprets that signals from these will have some similar properties. If the UE knows that two antenna ports are QCL with respect to a certain parameter (e.g. Doppler spread), the UE can estimate that parameter based on a reference signal transmitted one of the antenna ports and use that estimate when receiving another reference signal or physical channel the other antenna port. Typically, the first antenna port is represented by a measurement reference signal such as a CSI-RS (known as source RS) and the second antenna port is a demodulation reference signal (DMRS) (known as target RS) for physical downlink shared channel (PDSCH) or physical downlink control channel (PDCCH) reception.

For instance, if antenna ports A and B are QCL with respect to average delay, the UE can estimate the average delay from the signal received from antenna port A (known as the source reference signal (RS)) and assume that the signal received from antenna port B (target RS) has the same average delay. This is useful for demodulation since the UE can know beforehand the properties of the channel when trying to measure the channel utilizing the DMRS, which may help the UE in for instance selecting an appropriate channel estimation filter.

Information about what assumptions can be made regarding QCL is signaled to the UE from the network. In NR, four types of QCL relations between a transmitted source RS and transmitted target RS were defined:
- Type A: {Doppler shift, Doppler spread, average delay, delay spread}
- Type B: {Doppler shift, Doppler spread}
- Type C: {average delay, Doppler shift}
- Type D: {Spatial Rx parameter}

QCL type D was introduced to facilitate beam management procedures with analog beamforming and is known as spatial QCL. There is currently no strict definition of spatial QCL, but the understanding is that if two transmitted antenna ports are spatially QCL, the UE can use the same Rx beam to receive signals associated to them. This is helpful for a UE that uses analog beamforming to receive signals, since the UE need to adjust its Receiving (RX) beam in some direction prior to receiving a certain signal. If the UE knows that the signal is spatially QCL with some other signal it has received earlier, then it can safely use the same RX beam to receive also this signal. Note that for beam management, the discussion mostly revolves around QCL Type D, but it is also necessary to convey a Type A QCL relation for the RSs to the UE, so that it can estimate all the relevant large-scale parameters. In other words, one could say that two signals are transmitted in the same direction or via the same downlink beams when these are QCL Type D. Hence, the network may give this relation between a channel to be decoded (e.g. PDCCH/PDSCH) and a signal that is known to be transmitted in a given direction that may be used as reference by the UE, like a CSI-RS, SSB, etc.

Typically, this is achieved by configuring the UE with a CSI-RS for Tracking Reference Signal (TRS) for time and/or frequency offset estimation, and/or SSB. To be able to use any QCL reference, the UE would have to receive it with a sufficiently good SINR. In many cases, this means that the TRS has to be transmitted in a suitable beam to a certain UE.

Together with the concept of QCL source there is the concept of a TCI state. Each of the M states in the list of TCI states may be interpreted as a list of M possible beams transmitted in the downlink from the network and/or a list of M possible Transmission Points (TRP)s used by the network to communicate with the UE. The M TCI states can also be interpreted as a combination of one or multiple beams transmitted from one or multiple TRPs.

To introduce dynamics in beam and TRP selection/switching, the UE may be configured through RRC signaling with M TCI states (e.g. during connection setup, resume, reconfiguration, handovers, etc.), where M is up to 128 in frequency range 2 (FR2) for the purpose of PDSCH reception and up to 8 in FR1, depending on UE capability.

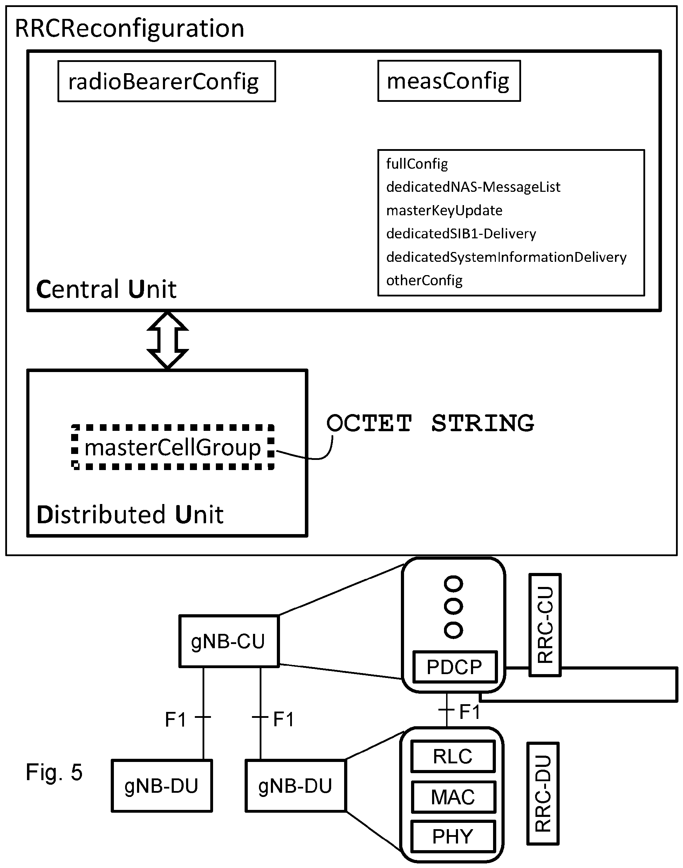

In terms of RRC signaling, TCI states are currently configured as part of the so-called CellGroupConfig, which is a Distributed Unit (DU) configuration (i.e. decided by the baseband unit) in a Central Unit (CU)-DU split architecture, and conveyed to the UE via for example an RRCResume (i.e. during transition from Inactive to Connected) or RRCReconfiguration (e.g. during handovers, intra-cell reconfigurations or transitions from Idle to Connected), as in the example shown below: See also **Figure 5****.**

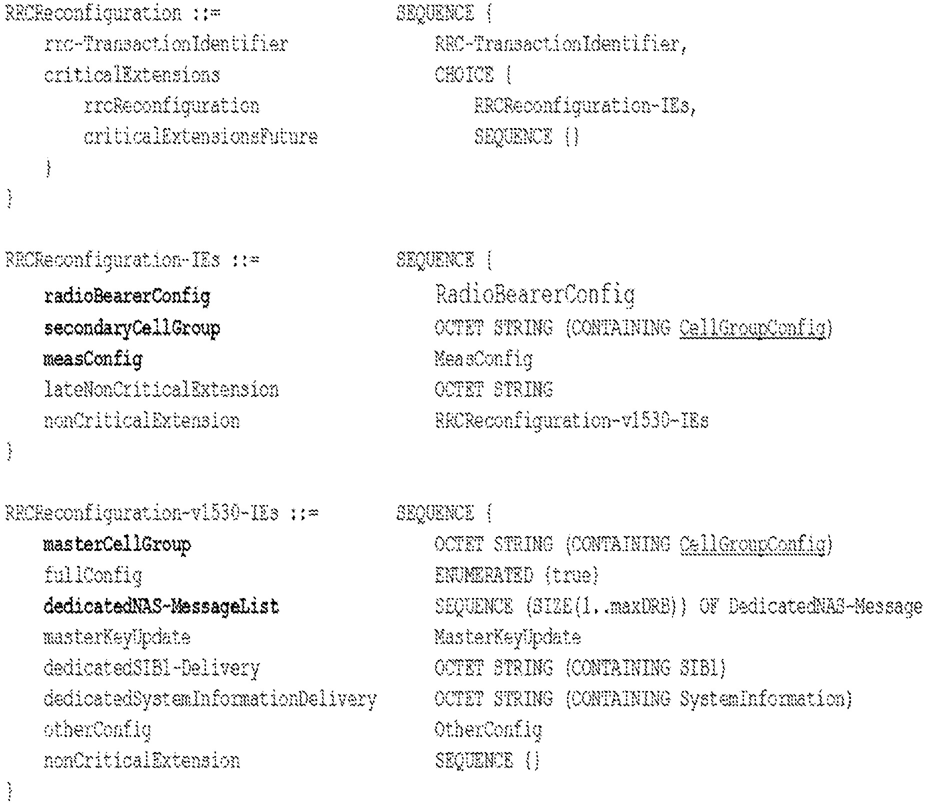

The TCI states configurations are signaled as part of the PDSCH configuration, which is configured per each Downlink (DL) Bandwidth Part (BWP) of an SpCell (i.e. a PCell or a PSCell), where an SpCell can be comprised of one or multiple DL BWPs. In terms of signaling this is structured as follows, e.g. for the initial DL BWP case:

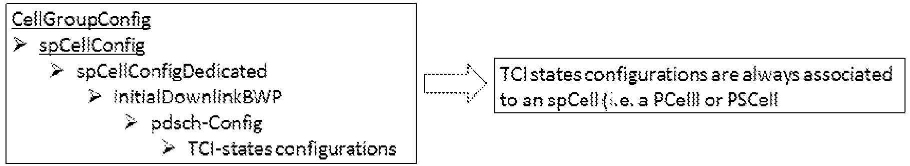

The PDSCH configuration for a given DL BWP comprising a list of TCI states may be added or modified.

A second list of TCI states is configured for PDCCH, also per DL BWP. In the PDCCH-Config there is a list of Control Resource Sets so-called (CORESET).

Each CORESET contains a length (1, 2, or 3 OFDM symbols) as well as a frequency-domain allocation of PDCCH (i.e. where in frequency the PDCCH is transmitted and shall be monitored by the UE). The TCI state configuration indicated which TCI is used to receive the PDCCH candidates transmitted in that CORESET. Each CORESET can have a different TCI state configured/activated, enabling the possibility to use different transmit beams for different PDCCH candidates. In the CORESET configuration, there is a pointer (TCI-State ID) to the list of TCI configurations provided in PDSCH.

Each TCI state configuration contains a pointer, known as TCI State ID (TCI-Stateld), which points to the TCI state. That pointer may be used, for example, to refer to a TCI configuration in a CORESET configuration. In other words, the TCI configurations are provided in the PDSCH configuration in a given DL BWP. And, for PDCCH the CORESET configuration contains a TCI state pointer to a configured TCI state in PDSCH.

Each TCI state contains the previously described QCL information, i.e. one or two source downlink reference signals (RS), where each source RS associated with a QCL type. For example, a TCI state contains a pair of reference signals, each associated with a QCL type, e.g. two different CSI-RSs {CSI-RS1, CSI-RS2} is configured in the TCI state as {qcl-Type1 ,qcl-Type2} = {Type A, Type D}. It means the UE can derive Doppler shift, Doppler spread, average delay, delay spread from CSI-RS1 and Spatial Rx parameter (i.e. the RX beam to use) from CSI-RS2. In terms of RRC signaling, a TCI state is represented by an IE called TCI-State.

As seen above in the TCI-State IE definition, there is a field called cell. According to the definition in 3GPP TS 38.331, the field called cell in the QCL configuration (i.e. cell field of IE ServCelllndex) is the UE's serving cell in which the Reference Signal that is QCL source is being configured. If the field is absent, it applies to the serving cell in which the TCI-State is configured (i.e. the spCell of the cell group, not an indexed SCell). The RS can be located on a serving cell other than the serving cell in which the TCI-State is configured only if the qcl-Type is configured as type D (see 3GPP TS 38.214 section 5.1.5).

In other words, for a given spCellConfig, the RS for a given TCI state is associated to a serving cell in that cell group, which may be the PCell and/or PScell or an associated SCell(s). That is indicated by the field cell in the TCI state configuration. And if the field is absent, that refers to the cell where the TCI state is configured.

### Activation of TCI state / beam indication / beam switching

Once the UE has been configured with a CellGroupConfig (e.g. in RRCResume, during transition from Inactive to Connected, or in a handover), and spCellConfig with PDSCH and PDCCH configurations per BWP having possible TCI states associated to different transmission downlink beams where these channels need to be detected (or in other words, how the UE should consider its Rx beam to decode these channels), the UE needs to know when the network is transmitting in the time domain. In other words, all these TCI states that are configured are not considered to be used/monitored all the time. Hence, a signaling efficient activation/deactivation procedure is defined in NR.

The network can activate via MAC protocol layer Control Element (MAC CE) one TCI state for PDCCH (i.e. provides a TCI for PDCCH) and up to eight active TCI states for PDSCH. The number of active TCI states the UE support is a UE capability, but the maximum is 8.

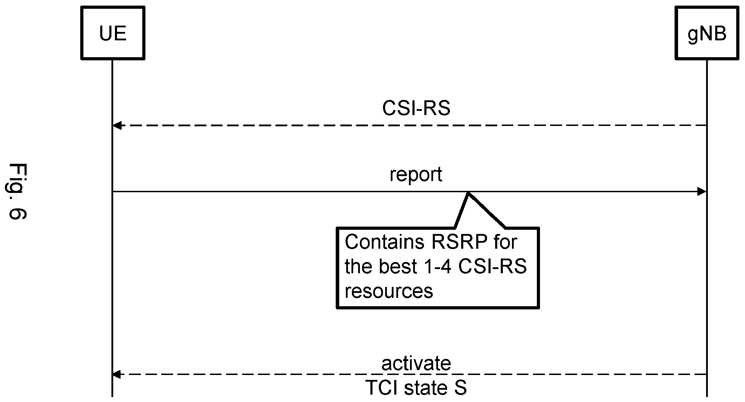

**Figure 6** depicts TCI state activation via MAC CE. The gNB transmits CSI-RS in narrow beams. The gNB chooses a CSI-RS resource from the measurement. The gNB knows in which beam it transmitted that CSI-RS resource, and maps that beam to an SSB b. Finally, it determines the TCI state S that includes the corresponding SSB index.

Assume that a UE has 4 active TCI states, from a list of totally 64 configured TCI states. Hence, 60 TCI states are inactive or deactivated for this particular UE, but some may be active for another UE, and the UE needs not to be prepared to have large scale parameters estimated for those. But the UE continuously tracks and updates the large scale parameters for the 4 active TCI states by measurements and analysis of the source RSs indicated by each TCI state. When scheduling a PDSCH to a UE, the DCI contains a pointer to one active TCI. The UE then knows which large scale parameter estimate to use when performing PDSCH DMRS channel estimation and thus PDSCH demodulation.

The MAC CE structure for the activation of UE-specific PDSCH TCI state is shown below, as it has been defined in TS 38.321, with the exact definition of the fields:

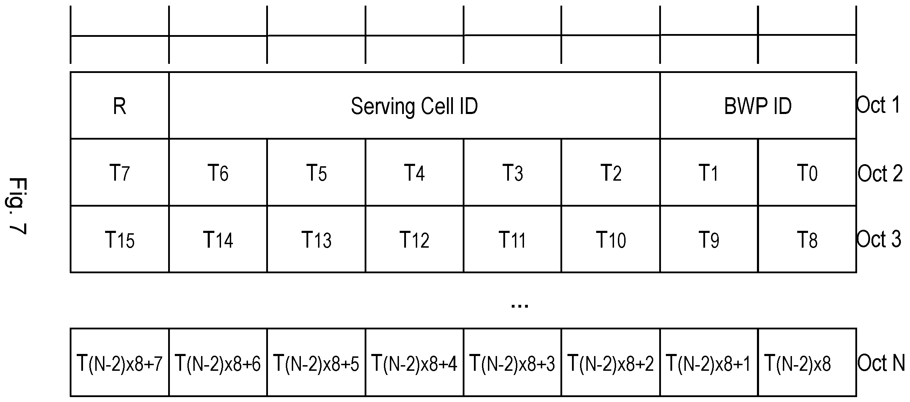

**Figure 7** depicts 3GPP Figure 6.1.3.14-1: TCI States Activation/Deactivation for UE-specific PDSCH MAC CE.
- Serving Cell ID: This field indicates the identity of the Serving Cell for which the MAC CE applies. It refers to the cell field in the RRC configuration for a given TCI state. The length of the field is 5 bits;
- BWP ID: This field indicates a DL BWP for which the MAC CE applies as the codepoint of the DCI bandwidth part indicator field as specified in TS 38.212 [9]. The length of the BWP ID field is 2 bits;
- Ti: If there is a TCI state with TCI-Stateld i as specified in TS 38.331 [5], this field indicates the activation/deactivation status of the TCI state with TCI-Stateld i, otherwise MAC entity shall ignore the Ti field. The Ti field is set to 1 to indicate that the TCI state with TCI-Stateld i shall be activated and mapped to the codepoint of the DCI Transmission Configuration Indication field, as specified in TS 38.214 [7]. The Ti field is set to 0 to indicate that the TCI state with TCI-Stateld i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with Ti field set to 1 shall be mapped to the codepoint value 0, second TCI State with Ti field set to 1 shall be mapped to the codepoint value 1 and so on. The maximum number of activated TCI states is 8;
- R: Reserved bit, set to 0.

The MAC CE structure for the activation of UE-specific PDCCH TCI state is shown below, as in 3GPP TS 38.321, with the exact definition of the fields:

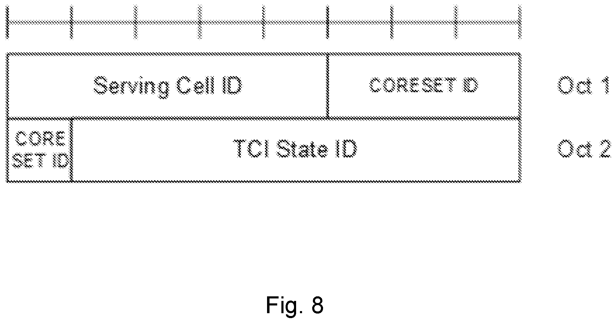

**Figure 8** depicts 3GPP Figure 6.1.3.15-1: TCI State Indication for UE-specific PDCCH MAC CE
- Serving Cell ID: This field indicates the identity of the Serving Cell for which the MAC CE applies. The length of the field is 5 bits;
- CORESET ID: This field indicates a Control Resource Set identified with ControlResourceSetld as specified in TS 38.331 [5], for which the TCI State is being indicated. In case the value of the field is 0, the field refers to the Control Resource Set configured by controlResourceSetZero as specified in TS 38.331 [5]. The length of the field is 4 bits;
- TCI State ID: This field indicates the TCI state identified by TCI-Stateld as specified in 3GPP TS 38.331 applicable to the Control Resource Set identified by CORESET ID field. If the field of CORESET ID is set to 0, this field indicates a TCI-Stateld for a TCI state of the first 64 TCI-states configured by tci-States-ToAddModList and tci-States-ToReleaseList in the PDSCH-Config in the active BWP. If the field of CORESET ID is set to the other value than 0, this field indicates a TCI-Stateld configured by tci-StatesPDCCH-ToAddList and tci-StatesPDCCH-ToReleaseList in the controlResourceSet identified by the indicated CORESET ID. The length of the field is 7 bits.

The way the UE knows what a given MAC CE is about is via Logical Channel ID (LCID) values. The following table from TS 38.321 provides LCID(s) for Downlink Shared Channel (DL-SCH) for the different use cases:

| **Index** | **LCID values** |
|---|---|
| 0 | CCCH |
| 1-32 | Identity of the logical channel |
| 33-46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS / CSI-IM Resource Set Activation/Deactivation |
| 56 | Duplication Activation/Deactivation |
| 57 | SCell Activation/Deactivation (four octet) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

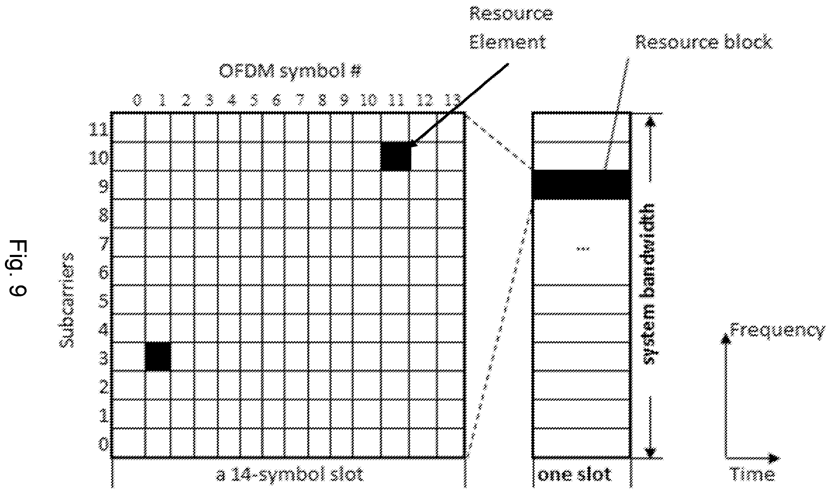

For dynamic scheduling, the basic NR physical time-frequency resource grid is illustrated below, where only one resource block (RB) within a 14-symbol slot is shown. One OFDM subcarrier during one OFDM symbol interval forms one Resource Element (RE). See **Figure 9****.**

Downlink transmissions can be dynamically scheduled, i.e., in each slot the gNB transmits downlink control information (DCI) over PDCCH about which UE data is to be transmitted to and which RBs in the current downlink slot the data is transmitted on. PDCCH is typically transmitted in the first one or two OFDM symbols in each slot in NR. The UE data are carried on PDSCH. A UE first detects and decodes PDCCH and the decoding is successfully, it then decodes the corresponding PDSCH based on the decoded control information in the PDCCH. Uplink data transmission can also be dynamically scheduled using PDCCH. Similar to downlink, a UE first decodes uplink grants in PDCCH and then transmits data over PUSCH based the decoded control information in the uplink grant such as modulation order, coding rate, uplink resource allocation, etc.

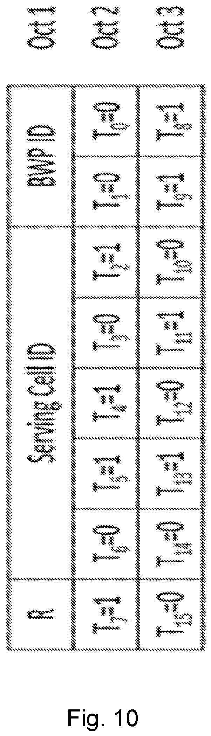

An example of how the TCI States are mapped to the codepoints in DCI Transmission Configuration Indication field in NR-Rel-15 is now given. The example is given in **Figure 10****,** where the MAC CE for Activation/Deactivation of TCI States for UE-specific PDSCH has a size of 3 octets and contains 16 Ti fields corresponding to 16 different TCI State IDs (where i = 0, 1, 2, ...., 15) that have been configured in a UE for a given BWP. In this example, TCI States with IDs i = 2, 4, 5, 7, 8, 9, 11, and 13 are being activated with the MAC CE shown in the figure. This means that the TCI State IDs are mapped to the codepoint values of DCI Transmission Configuration Indication field as follows:
- TCI State iD i=2 corresponds to codepoint value 0
- TCI State iD i=4 corresponds to codepoint value 1
- TCI State iD i=5 corresponds to codepoint value 2
- TCI State iD i=7 corresponds to codepoint value 3
- TCI State iD i=8 corresponds to codepoint value 4
- TCI State iD i=9 corresponds to codepoint value 5
- TCI State iD i=11 corresponds to codepoint value 6
- TCI State iD i=13 corresponds to codepoint value 7

Figure 10 depicts An example illustrating how the TCI States are mapped to the codepoints in DCI Transmission Configuration Indication field in NR-Rel-15.

### Reduced mobility interruption using MAC CE signaling

The beam management functionality was designed for a situation where multiple beams cover one cell. Due to a possibly smaller coverage area of these narrow beams, it is anticipated that a UE would change beam more frequently than it changes cells. To reduce the signaling load for the beam switches, it was decided that RRC signaling would not be required to facilitate such changes. Instead, signaling solution based on MAC CE or DCI was introduced in the NR L1 specifications.

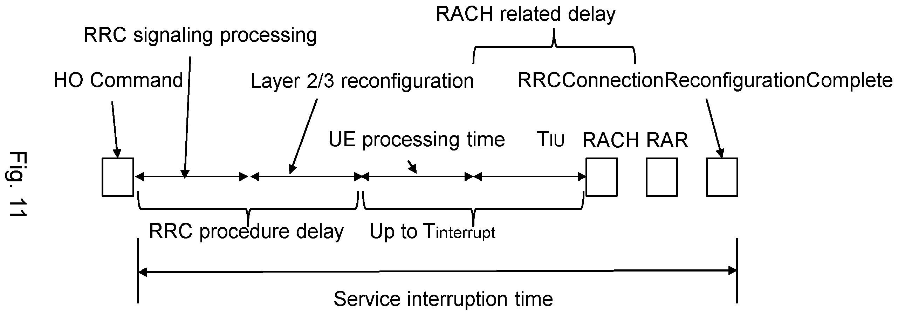

The signaling during a beam switch involves what we call a changing of the QCL source for the PDCCH/PDSCH. The QCL properties of the source enables the UE to demodulate the PDCCH/PDSCH DMRS by providing some guidance to the channel estimation. So, in summary, we can make the following observation: the beam management functionality specified in Rel-15 provides the mechanisms to change the QCL source for the PDCCH/PDSCH DMRS via MAC CE. Figure **11** depicts Mobility interruption time.

Once the UE has been provided with a new QCL source, it performs measurements on the corresponding RS to derive the relevant QCL properties. These QCL properties are then used when demodulating the PDCCH/PDSCH. As was intended, the update of the QCL source has low overhead, and low latency. The MAC CE message is only two octets, and the UE applies the newly activated QCL source 3ms after the HARQ ACK for the MAC CE message has been sent. Hence, in summary, we can make the following observation: the beam management functionality specified in Rel-15 provides the mechanisms to change the QCL source for the PDCCH/PDSCH DMRS via MAC CE.

Note that the MAC CE indication is a synchronized procedure: the NW and the UE has the same understanding of when the update configuration takes effect. And, differently from RRC procedures like an RRCReconfiguration, there is no acknowledgement message, e.g. upon receiving an RRCReconfiguration the UE transmits to the network an RRCReconfigurationComplete.

In 5G NR, the network has the possibility to provide the UE with a completely new RRC configuration in the handover command. For instance, the configuration for the DMRSs or the PDCCH/PDSCH scrambling may be different in the new cell compared to the old cell. However, in contrast to LTE, there are no physical layer parameters that are hardcoded based on the physical cell identity (PCI) in NR. It is thus possible quite some similar physical layer configurations in serving and target cell.

In this case, it has been argued in 3GPP R1-1902528 Lower-layer mobility enhancements that the only thing that is needed for the UE to be able to start receiving data on the physical layer in the target cell is that the QCL source is updated: this would enable the UE to align to the target cell in an indicated direction to demodulate the bits and decode the data.

As discussed in the previous section, the RRC IE that carries the QCL source is called TCI-state.

The TCI state contains pointers to reference signal(s). The reference signals are implicitly associated with a serving cell via a serving cell integer index: hence, in 3GPP Release15, it is only possible to change QCL source to reference signals transmitted within a serving cell, SpCell or associated SCell within that SpCell group: It is not possible to change the QCL source to a reference signal in a non-serving cell.

It is noted that it is possible for the UE to perform measurements and derive at least some QCL properties from SSB transmitted from neighbour cells: this is what the UE would need to do to perform the RRM measurements to support L3-related procedures such as SCG addition, synchronization with sync (i.e. handovers), etc. For example, to perform the SSB-based RSRP (SS-RSRP) measurements on a target cell, the UE would have to synchronize to the PSS of that target, detect the SSS and demodulate the PBCH DMRS. The SS-RSRP is then measured on the SSS and optionally on the PBCH DMRS. To perform these actions, the UE would at least have to find the average delay of the SSB and can readily estimate the Doppler shift. Thus, a UE could easily use an SSB in a neighbour cell as a QCL source for PDCCH/PDSCH DMRS reception, providing that the UE previously performed measurements on that SSB.

To be able to use this functionality, it has been proposed in R1-1902528 Lower-layer mobility enhancements to introduce an identifier of the non-serving cell in the QCL-info where as proposed, a natural choice for such an identifier is the physical cell identity (PCI).

If a PCI would be introduced in the QCL-info, the network could update the QCL source to an RS in a non-serving cell. Once the indication command takes effect, the NW can directly start transmitting data over PDSCH from the new cell. Since the procedure is synchronized, the NW and the UE have the same understanding of when the updated configuration takes effect. Thus, the interruption in data communication can be eliminated.

### Multi-TRP communications in 3GPP Release 16

3GPP WG RAN1 has agreed to standardize a solution for multi-TRP communications. According to RP-182067 WID Enhancements on MIMO for NR (Australia, September 2018), the objectives of the work is to standardize enhancements on multi-TRP/panel transmission including improved reliability and robustness with both ideal and non-ideal backhaul:
- Specify downlink control signaling enhancement(s) for efficient support of non-coherent joint transmission;
- Perform study and, if needed, specify enhancements on uplink control signaling and/or reference signal(s) for non-coherent joint transmission;
- Multi-TRP techniques for URLLC requirements are included in this Wl.

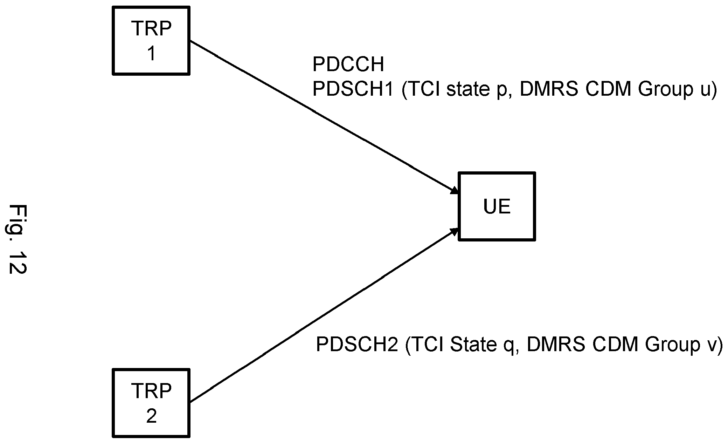

Current discussions focus on the support of PDSCH with multi-TRP. One variant that is being considered is a single PDCCH scheduling multiple PDSCH from different TRPs. The single PDCCH is received from one of the TRPs. Figure **12** shows an example where a DCI received by the UE in PDCCH from TRP1 schedules two PDSCHs. The first PDSCH (PDSCH1) is received from TRP1 and the second PDSCH (PDSCH2) is received from TRP2.

In such cases, each PDSCH transmitted from a different TRP has a different TCI state associated with it. In the example of Figure 12, PDSCH1 is associated with TCI State p, and PDSCH 2 is associated with TCI state q. The PDSCH DM-RSs from the different TRPs may belong to different DMRS CDM groups. In the example of Figure 12, the DMRS for PDSCH1 belongs to CDM group u while the DMRS for PDSCH2 belongs to CDM group v.

In 3GPP RAN1#96 in Athens the following has been agreed:

### Agreement

To support multiple-PDCCH based multi-TRP/panel transmission with intra-cell (same cell ID) and inter-cell (different Cell IDs), following RRC configuration can be used to link multiple PDCCH/PDSCH pairs with multiple TRPs
- one CORESET in a "PDCCH-config" corresponds to one TRP
   - FFS whether to increase the number of CORESETs per "PDCCH-config" more than 3

For Further Studies (FFS): UE monitoring and/or decoding behavior for multiple PDCCHs.

Include in LS to RAN2.

As it can be seen, the agreement indicates that multi-TRP transmission includes the inter-cell use case, where multiple beams may be transmitted from multiple cells. referring to figure 12, this would mean that the UE could have activated TCI states associated to PDCCH configurations with TCI states associated to a CQL sources associated to different cell IDs.

### SUMMARY

An object of embodiments herein may therefore to improve the security for mobility in a wireless communications network.

The present invention is defined by the appended independent claims.

According to an aspect, the object is achieved by a method performed by a User Equipment, UE, for handling authorization in relation to a mobility procedure in a wireless communications network.

The UE obtains (901) at least one security token. The UE receives (903) a mobility command for the mobility procedure from a network node in the wireless communications network. The mobility command comprises a security token. The mobility command relates to a protocol layer below a Radio Resource Control, RRC, protocol. The UE then decides (904) whether or not the mobility command is authorized, based on comparing the security token in the mobility command with the at least one obtained security token.

According to another aspect, the object is achieved by a method performed by a network node, for handling authorization in relation to a mobility procedure of a User Equipment, UE, in a wireless communications network. The network node configures the UE with at least one security token. The network node sends a mobility command for the mobility procedure to the UE. The mobility command relates to a protocol layer below Radio Resource Control, RRC, protocol, and which mobility command comprises one of the at least one security token. This enables the UE to decide whether or not the mobility command is authorized, based on comparing the security token in the mobility command with the at least one obtained security token.

According to another aspect, the object is achieved by a User Equipment, UE, configured to handle authorization in relation to a mobility procedure in a wireless communications network. The UE is configured to:
- Configure the UE with at least one security token,
- receive from a network node in the wireless communications network, a mobility command for the mobility procedure, which mobility command comprises a security token, which mobility command relates to a protocol layer below Radio Resource Control, RRC, protocol,
- decide whether or not the mobility command is authorized, based on comparing the security token in the mobility command with the at least one obtained security token.

According to another aspect, the object is achieved by a network node configured to handle authorization in relation to a mobility procedure of a User Equipment, UE, in a wireless communications network. The network node is further configured to:
- Configure the UE with at least one security token,
- send to the UE, a mobility command, for the mobility to be from the source cell to the target cell, which mobility command is adapted to relate to a protocol layer below Radio Resource Control, RRC, protocol and which mobility command comprises one of the at least one security token. This enables the UE to decide whether or not the mobility command is to be authorized, based on comparing the security token in the mobility command with the at least one obtained security token.

### BRIEF DESCRIPTION OF THE DRAWINGS

- Figure 1: is a schematic block diagram depicting prior art.
- Figure 2: is a schematic block diagram depicting prior art.
- Figure 3: is a sequence diagram depicting prior art.
- Figure 4: is a schematic block diagram depicting prior art.
- Figure 5: is a schematic block diagram depicting prior art.
- Figure 6: is a sequence diagram depicting prior art.
- Figure 7: is a schematic block diagram depicting prior art.
- Figure 8: is a schematic block diagram depicting prior art.
- Figure 9: is a schematic block diagram depicting prior art.
- Figure 10: is a schematic block diagram depicting prior art.
- Figure 11: is a schematic block diagram depicting prior art.
- Figure 12: is a schematic block diagram depicting prior art.
- Figure 13: is a schematic block diagram depicting embodiments of a wireless communication network.
- Figure 14: is a flow chart depicting embodiments of a method in a UE.
- Figure 15: is a flow chart depicting embodiments of a method in a network node.
- Figure 16: is a flow chart depicting an example embodiment herein.
- Figure 17: is a flow chart depicting an example embodiment herein.
- Figure 18: is a flow chart depicting an example embodiment herein.
- Figure 19: is a flow chart depicting an example embodiment herein.
- Figure 20: is a flow chart depicting an example embodiment herein.
- Figures 21: a and b are schematic block diagrams depicting embodiments of a UE.
- Figures 22: a and b are schematic block diagrams depicting embodiments of a network node.
- Figure 23: schematically illustrates a telecommunication network connected via an intermediate network to a host computer.
- Figure 24: is a generalized block diagram of a host computer communicating via a base station with a user equipment over a partially wireless connection.
- Figures 25 to 28: are flowcharts illustrating methods implemented in a communication system including a host computer, a base station and a user equipment.

### DETAILED DESCRIPTION

As a part of developing embodiments herein a problem was identified which first will be discussed.

A problem embodiments herein addresses is how to enable a mobility mechanism such as inter-cell mobility relying on lower layer signaling, i.e. in a protocol layer below RRC, like using a MAC CE, where a UE can change cells, e.g. move from one beam from one cell to another beam from another cell, by an indication not involving RRC signaling or any other higher layer protocols i.e. above the MAC protocol in the stack, for example, via MAC CEs.

A first existing solution is one in the current 5G NR specifications. As discussed in the background, the existing solution in the 5G NR Release 15 standard does not support this inter-cell beam switching use case without RRC signaling. In one hand, the standard has a mechanism for TCI state activation and/or deactivation which works as a way to make a UE switch Rx beams, or in other words, switch the direction it listens to, assuming that the network starts transmitting in a different direction or Tx beam, as explained in the background.

A second existing solution is the one presented in the background, and described in the contribution to 3GPP WG1 R1-1902528 Lower-layer mobility enhancements. There, the fundamental idea of performing L1-based mobility without RRC signaling has been presented to reduce the interruption time.

A third solution to be considered, or at least some aspects of it, is the one discussed for multi-TRP enhancements. Therein, current agreements state that it should be possible for a UE to be connected to beams from multiple TRPs, where each beam may possibly be associated to different cells. In other words, that the UE should be able to have activated a QCL source for a given TCI state associated to a PDCCH configuration that is associated to a cell A, and at the same time have activated a QCL source for a TCI state associated to a PDCCH configuration that is associated to a cell B. However, higher layer impact of that decision was not yet discussed for this problem.

For all these existing solutions, they are vulnerable for security attacks, such as a false base station which uses a MAC-CE command to handover the UE to another cell, such as a cell controlled by this or another false base station. Moreover, in current specifications, inter-cell mobility is so far using security mechanisms, to avoid this kind of security attacks. For example, the inter-cell mobility, also known as handover, is performed by ciphered and integrity protected RRC signalling. In fact, a general requirement on the 5G system is according to 3GPP TS 33.501 is as follows:
**"Access** ***network authorization:** Assurance shall be provided to the UE that it is connected to an access network that is authorized by the serving network to provide services to the UE. This authorization is 'implicit' in the sense that it is implied by a successful establishment* of *access network security."*

In other words, when security is established between a UE and an access network, such as a RAN, within a wireless communications network, or a node in the access network such as a gNB, it shall be assured that the UE is served by this access network, and nothing else, such as a false gNB, not operated by the PLMN providing services to the UE.

Thus, there is a need for a security mechanism also for mobility controlled by lower layer signalling, such as when using a MAC CE to order a UE to change cells. Otherwise, if the UE is made to change cells in an unsecure manner, it could be directed to another access network than the authorized gNB which may lead to, for instance, that the UE is hijacked by a false access network or that the UE connection is dropped.

An object of embodiments herein may therefore to improve the security for mobility in a wireless communications network.

Example embodiments herein introduces a security mechanism to provide integrity of lower layer signalling, such as MAC CE, used for inter-cell mobility including e.g. Handover (for 5G NR also known as Reconfiguration with sync) or Multi-Radio Dual Connectivity procedures such as PSCell addition, PSCell change; or Carrier Aggregation procedures such as SCell addition, SCell removal, SCell activation, SCell deactivation, SCell state change, etc. Examples of embodiments herein may e.g. comprise:
- A security token may be obtained in the UE provided to or a UE e.g. in an encrypted RRC message. The UE stores this security token.
- Then in a lower layer mobility command, such as a MAC CE based handover (HO) command, to the UE, which typically is sent unencrypted, a security token is included to integrity protect the lower layer handover command.
- The UE validates the received security token in an authorization check. As part of the authorization check, the UE may compare the security token in the received lower layer handover command with the token stored by the UE.
- The UE only performs the mobility as instructed by the lower layer mobility command, if it does contain the same security token as the one stored by the UE, i.e. successful authorization check.
- After receiving a valid mobility command, such as MAC CE HO command, the UE clears the security token and a new security token needs to be assigned before the UE can accept a new mobility command such as MAC CE HO command.

In embodiments herein, a security mechanism is added which assures that the UE is served by an authorized and trusted network e.g. network node. Since integrity protection is provided on the lower layer signalling, such as the MAC CE, it prevents an unauthorized access network, such as a false base station part of such an unauthorized access network, to direct the UE to another cell, and thus may hijack the UE or cause the UE connection to be dropped. Since the handover token may only be used once, it also prevents replay attacks due to that an unauthorized access network cannot just listen to mobility commands such as MAC CE HO commands and reuse the content to send its own mobility commands such as MAC CE HO commands to the UE.

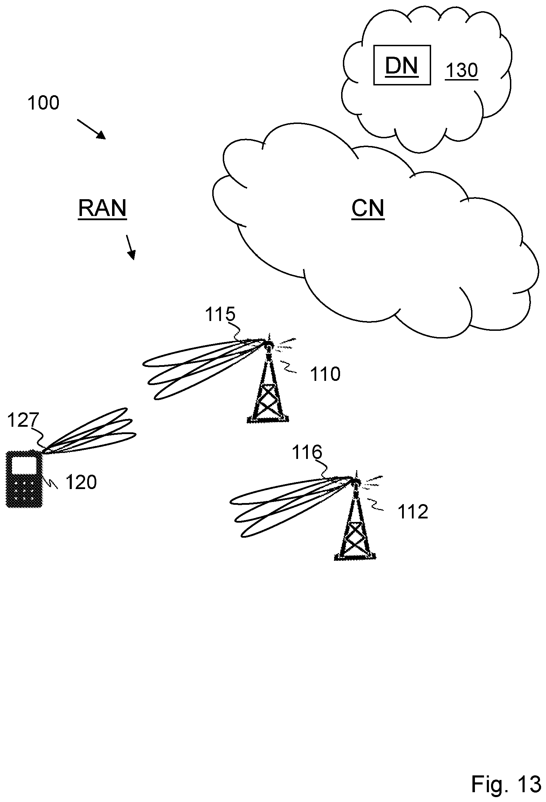

**Figure 13** is a schematic overview depicting a **wireless communications network 100** wherein embodiments herein may be implemented. The wireless communications network 100 comprises one or more **RANs** and one or more CNs. The wireless communications network 100 may use 5G NR but may further use a number of other different technologies, such as, Wi-Fi, (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

Network nodes such as a **network node 110** and a **second network node 112** operate in the wireless communications network 100, providing radio coverage by means of antenna beams, referred to as beams herein. The network node 110 provides a number of **beams 115** and may use these beams for communicating with e.g. a UE 120. The second network node 112 also provides a number of **beams 116** and may use these beams for communicating with e.g. the UE 120. The network nodes 110 and 112 each provides radio coverage over a geographical area by means of antenna beams. The geographical area provided by the antenna beams may also be referred to as a number of SpCells, a service area, beam or a group of beams. The network nodes 110 and 112 may each be a transmission and reception point e.g. a radio access network node such as a base station, e.g. a radio base station such as a NodeB, an evolved Node B (eNB, eNode B), an NR Node B (gNB), a base transceiver station, a radio remote unit, an Access Point Base Station, a base station router, a transmission arrangement of a radio base station, a stand-alone access point, a Wireless Local Area Network (WLAN) access point, an Access Point Station (AP STA), an access controller, a UE acting as an access point or a peer in a Device to Device (D2D) communication, or any other network unit capable of communicating with a UE within the cell served by network node 110 depending e.g. on the radio access technology and terminology used.

User Equipments operate in the wireless communications network 100, such as a UE 120. The UE 120 may provide radio coverage by means of a number of antenna beams 127, also referred to as beams herein.

The UE 120 may e.g. be an NR device, a mobile station, a wireless terminal, an NB-loT device, an eMTC device, a CAT-M device, a WiFi device, an LTE device and an a non-access point (non-AP) STA, a STA, that communicates via a base station such as e.g. the network node 110, one or more Access Networks (AN), e.g. RAN, to one or more core networks (CN). It should be understood by the skilled in the art that the UE relates to a non-limiting term which means any UE, terminal, wireless communication terminal, user equipment, (D2D) terminal, or node e.g. smart phone, laptop, mobile phone, sensor, relay, mobile tablets or even a small base station communicating within a cell.

Methods herein may in a first aspect be performed by the UE 120, and in a second, aspect by the network node 110. As an alternative, a Distributed Node (DN) and functionality, e.g. comprised in a **cloud 140** as shown in Figure 13, may be used for performing or partly performing the methods.

In many examples herein a handover is used as an example of the mobility process. However, the embodiments described herein are also applicable to Multi-Radio Dual Connectivity procedures such as PSCell addition, PSCell change; or Carrier Aggregation procedures such as SCell addition, SCell removal, SCell activation, SCell deactivation, SCell state change, etc.

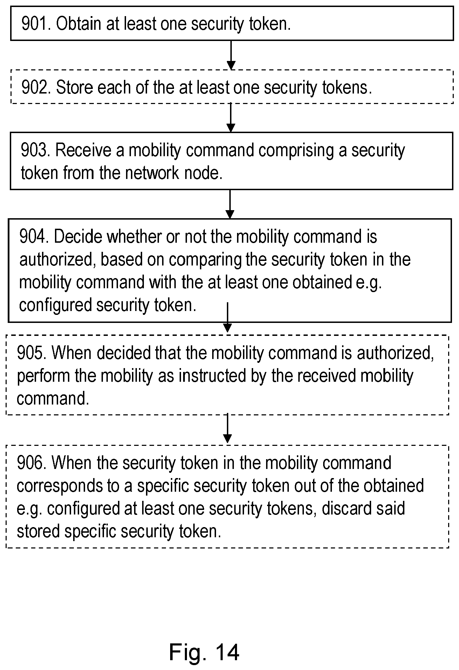

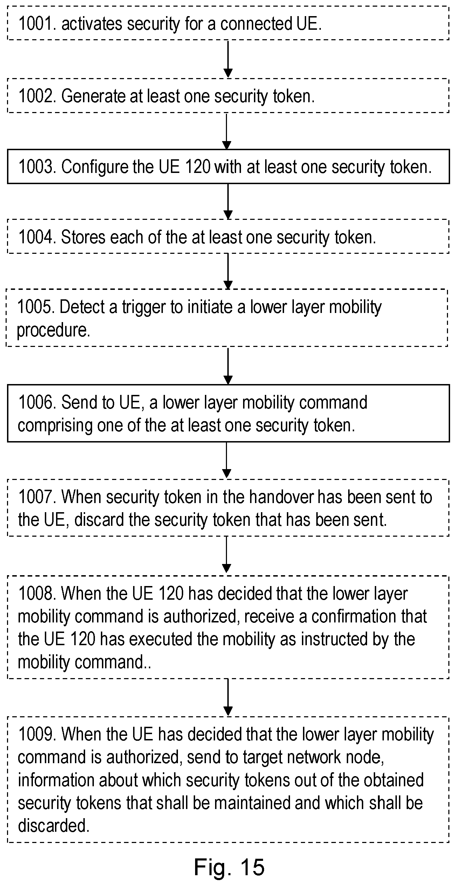

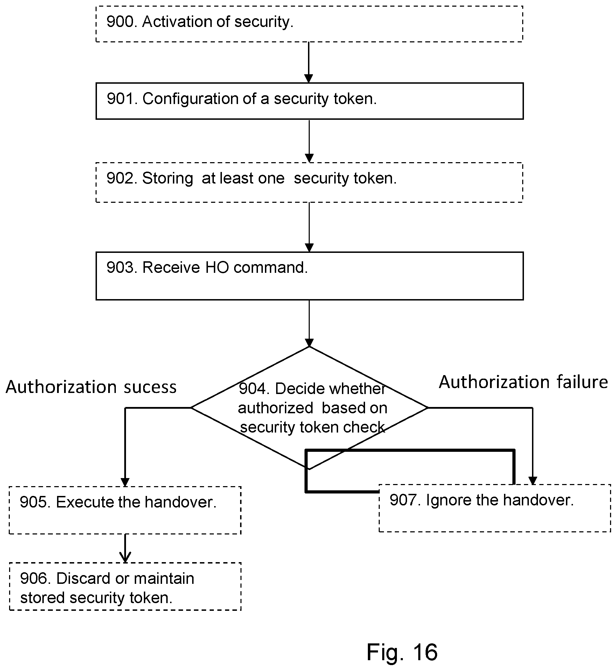

The method will first be described in a general way together with Figure 14 and 15, and thereafter examples and explanations will be described together with Figures 16-20.

**Figure 14** shows an example method performed by the UE 120. The method is performed by the UE 120, for handling an authorization in relation to a mobility procedure e.g. a handover from a source cell to a target cell, in the wireless communications network 100. To handling an authorization may e.g. mean to manage an authorization.

The method may comprise at least any one or more out of the following actions, which actions may be taken in any suitable order:

### Action 901.

The UE 120 obtains e.g. configures the UE 120 with at least one security token. This may e.g. be performed by creating it e.g. according to a security configuration received from the network or receiving it from the network such as the network node 110. The at least one security token may comprise multiple security tokens. As an alternative the UE 120 is configured with security configuration for creating at least one security token.

In some embodiments the UE 120 is configured with security configuration to enable the UE 120 to verify that a received security token included in a message associated to a lower layer protocol is originated from a trustworthy source i.e. a network where the UE 120 has been security authenticated, that enables the UE 120 to create at least one security token.

### Action 902.

The UE 120 may store each of the at least one, e.g. multiple, security tokens.

### Action 903.

The UE 120 receives a mobility command from the network node 110. The mobility command may e.g. be a handover command for mobility from the source cell to the target cell. The mobility command relates to a protocol layer below Radio Resource Control (RRC) protocol. The lower layer protocol may e.g. be a MAC protocol, an RLC protocol, a PHY protocol, or any other protocol below RRC in the exiting stack, and any synchronous protocol. The mobility command comprises a security token.

### Action 904.

The UE 120 decides whether or not the mobility command is authorized, based on comparing the security token in the mobility command with the at least one obtained security token, e.g. calculated by the UE based on a security configuration received from the network. This is to see whether or not the security token in the mobility command corresponds to a security token from a trustworthy network node.

In some embodiments, the UE 120 has obtained multiple security tokens. In these embodiments the UE 120 decides whether or not the mobility command is authorized, based on comparing the security token in the mobility command with the obtained e.g. configured multiple security tokens. This is to see whether or not the security token in the mobility command corresponds to any of the obtained e.g. configured multiple security tokens.

### Action 905.

When decided that the mobility command is authorized, the UE 120 perform the mobility as instructed by the received mobility command.

### Action 906.

In some embodiments, the UE 120 has stored each of the at least one such as multiple security tokens. When the security token in the mobility command corresponds a specific security token out of the obtained e.g. configured multiple security tokens, the UE 120 may discard said stored specific security token.

The UE 120 may receive from a target network node 112 serving the target cell, information about which previously stored security tokens out of the obtained e.g. configured multiple security tokens shall be maintained and which shall be discarded.

**Figure 15** shows an example method performed by a network node 110, e.g. comprising a CU and a DU. The method is for handling authorization in relation to a mobility procedure of the UE 120 in the wireless communications network 100, e.g. a handover of the UE 120 from a source cell to a target cell. The method may comprise at least any one or more out of the following actions, which actions may be taken in any suitable order:

### Action 1001.

This action will be discussed and shown below.

### Action 1002.

In some embodiments, the network node 110 generates at least one security token, in some embodiments, the at least one security token comprises multiple security tokens.

As mentioned above, in some embodiments it is the UE 120 that generates the at least one security token.

### Action 1003.

The network node 110 configures the UE 120 with at least one security token, e.g. the multiple security tokens.

As an alternative the network node 110 configures the UE 120 with security configuration for creating at least one security token.

### Action 1004.

In some embodiments, the network node 110 stores each of the at least one security token, e.g. each of the multiple security tokens.

### Action 1005.

In some embodiments, the network node 110 detects a trigger to initiate a lower layer mobility procedure.This action will be discussed and shown below.

### Action 1006.

The network node 110 then sends a mobility command for a mobility procedure to the UE 120. The mobility command, e.g. a handover command, relates to a protocol layer below RRC protocol and the mobility command comprises one of the at least one security token. The lower layer protocol may e.g. be a MAC protocol, an RLC protocol, a PHY protocol, or any other protocol below RRC in the exiting stack, and any synchronous protocol. This enables the UE 120 to decide whether or not the mobility command is authorized, based on comparing the security token in the mobility command with the at least one obtained e.g. configured security token, or e.g. with the multiple security tokens. This is to see whether or not the security token in the mobility command corresponds to any of the obtained e.g. configured at least one or multiple security tokens.

### Action 1007.

When the security token in the handover has been sent to the UE 120, the network node 110 may discarding the stored security token that has been sent. Thus the network node 110 may discard the one of the at least one security token.

### Action 1008.

When the UE 120 has decided that the lower layer mobility command is authorized, the network node 110 may receive from the UE 120 a confirmation that the UE 120 has executed the mobility as instructed by the mobility command.

### Action 1009.

When the UE 120 has decided that the lower layer mobility command is authorized, the network node 110 may send information to a target network node 112 serving the target cell, information about which security tokens out of the obtained e.g. configured at least one, e.g. multiple security tokens that shall be maintained and which shall be discarded. This may then be forwarded to the UE 120 by the target network 112.

The UEs mentioned in the below examples may be represented by the UE 120, and the network nodes and gNBs mentioned in the below examples may be represented by the network node 110. In this example, the mobility procedure relates to a handover. The embodiments described above will be further exemplified and explained below, and these examples and explanations may be combined with any suitable embodiments above.

### Example embodiment in the UE 120

An example embodiment of the method actions performed by the UE 120 is shown in **Figure 16****.** The action reference numbers correspond to the matching action reference numbers described above.

**Action 901.** Activation of security: The UE 120 activates security that may be integrity protection and ciphering. This normally takes place using a Security Mode Control procedure initiated by the network such as the network node 110, when the UE 120 sets up the RRC connection to network such as the network node 110. After this point, all RRC and Non-access stratum (NAS) signalling, with very few exceptions, is integrity protected and ciphered.

**Action 902.** Configuration of a security token: The network such as the network node 110 transmits a security token to the UE 120. This security token may be part of an RRC message, such as the RRCReconfiguration message in NR. The UE 120 stores the security token, which may replace any previously stored security token.

**Action 903.** Receive mobility command such as HO command: The UE 120 e.g. receives a MAC CE HO command including a security token.

**Action 904.** Authorization check: The UE 120 checks if the value of included security token matches the value of the stored security token.

**Action 905.** Execute the handover: If there is a match, Authorization success, the UE 120 removes the stored token, since it has now been used once, and executes the handover according to the content of the mobility command such as HO MAC CE HO Command, such as an included cell identifier.

**Action 906.** Discard or maintain stored security token.

**Action 907.** Ignore the handover: If there is not a match, Authorization failure, the UE 120 ignores the mobility command such as the MAC CE HO Command.

### Example embodiment in the network such as the network node 110

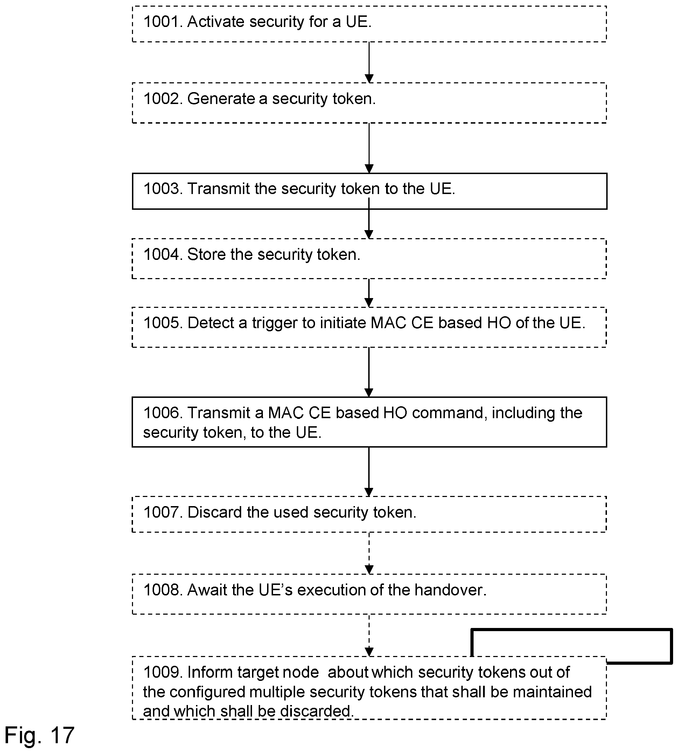

An example embodiment of the method actions performed by the network such as the network node 110 e.g. an gNB, is shown in **Figure 17****.** The action reference numbers correspond to the matching action reference numbers described above. The order of Actions may be swapped.

**Action 1001.** The network node 110, e.g. the gNB, activates security for a connected UE 120.

**Action 1002.The** network node 110 generates a security token to be used for authorization of a mobility command such as a MAC CE based HO towards the UE 120.

**Action 1003.** The network node 110 transmits the security token to the UE 120 e.g. by using ciphered and integrity protected signaling, for example using an RRCReconfiguration message. This Action may be seen as bootstrapping, or configuring, the UE 120 with the security parameter needed for a future authorization of the network.

**Action 1004.** The network node 110 stores a security token to be used for authorization of a mobility command such as a MAC CE based HO towards the UE 120.

**Action 1005.** The network node 110 detects a trigger to initiate the mobility procedure such as the MAC CE based HO of the UE 120. The trigger may e.g. come in the form of a L1-based or RRC-based measurement report from the UE 120.

**Action 1006.** The network node 110 transmits the mobility command such as the MAC CE based HO command to the UE 120, including the security token for the purpose of authorization of the network as the legitimate source of the mobility command such as the MAC CE based HO command.

**Action 1007.** The network node 110 may then discard the security token, which should only be used once, i.e. for a single authorization. This Action may optionally be delayed until the network node 110 has received or detected, a confirmation that the UE 120 has received the mobility command such as the MAC CE based HO command and executed the mobility process such as the MAC CE based HO, i.e. this Action may optionally be performed after the subsequent Action.

**Action 1008.** The network node 110 may await a confirmation that the UE 120 has executed the mobility process such as the MAC CE based HO.

**Action 1009.** The network node 110 may inform target network node 112 about which security tokens out of the configured multiple security tokens that shall be maintained, and which shall be discarded.

When implementing a gNB such as the network node 110, a split architecture may be used, wherein the network node 110 is divided into a Central Unit (CU) and one or more Distributed Unit(s) (DU). The CU in the examples below means the CU in the network node 110 according to the split architecture, and the DU in the examples below means the DU in the network node 110 according to the split architecture.

The interface between a CU and a DU is standardized and denoted F1. The CU is responsible for the higher functional layers and higher protocol layers which are less time critical and delay sensitive than lower functionality and protocol layers. Thus, typically, the DU is responsible for the physical layer and the MAC layer, while the CU is responsible for the RRC, PDCP and SDAP layers. Typically, when not in dual connectivity mode, a UE 120 is connected via a single DU to a single CU.

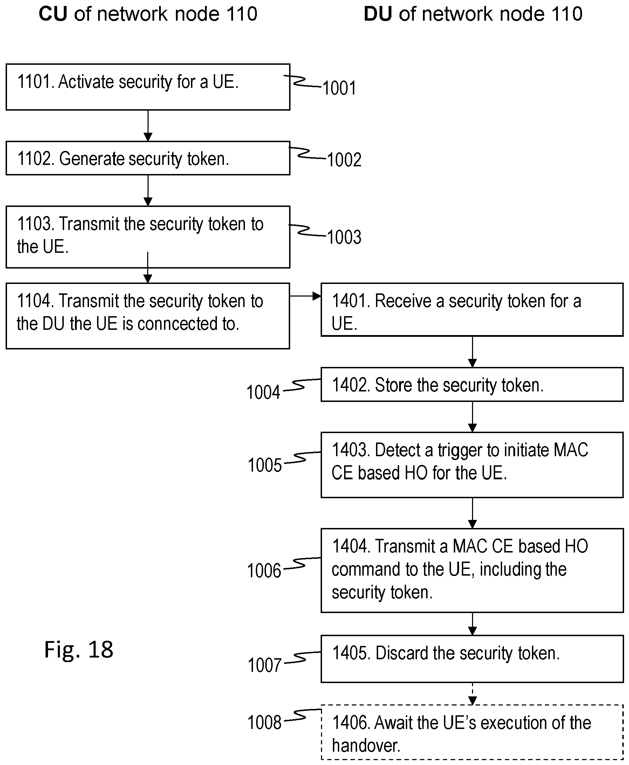

**Figure 18****,** **Figure 19** **and** **Figure 20** take a split network node 110 architecture into account and illustrate three different embodiment variants of actions performed by the CU and the DU in the network node 110. The order of the Actions, e.g. the Actions 1405 and 1406 may be swapped. In these figures, the action reference numbers corresponds to the matching action reference numbers as described above and are also pointed out in these Figures.

Method actions performed by the CU and DU in the network node 110 with split architecture according to one example embodiment, is shown in **Figure 18****.** In this embodiment variant, the CU in the network node 110, proactively transfers the security token to the DU in the network node 110, and the DU is responsible for detection of a trigger for, and initiation of, the mobility procedure such as the MAC CE based HO of the UE 120. The following are the Actions performed by the CU in the network node 110 according to an embodiment variant in Figure 18.

**Action 1101.** The CU activates security for the connected UE 120.

**Action 1102.** The CU generates a security token to be used for authorization of mobility procedure such as a MAC CE based HO towards the UE 120.

**Action 1103.** The CU transmits, via the DU, the security token to the UE 120 using ciphered and integrity protected signaling, e.g. using an RRCReconfiguration message. This Action may be seen as bootstrapping, or configuring, the UE 120 with the security parameter needed for a future authorization of the network.

**Action 1104.** The CU proactively transmits the security token to the DU which the UE 120 is connected.

The following are the Actions performed by the DU according to the embodiment variant in Figure 18.

**Action 1401.** The DU receives the security token for the UE 120 from the CU.

**Action 1402.** The DU stores the received security token for potential later use. If the UE 120 would leave the DU before the security token has been used, the DU may discard the security token and the subsequent Actions are not performed.

**Action 1403.** The DU detects a trigger to initiate a mobility procedure such as a MAC CE based HO of the UE 120. The trigger may e.g. come in the form of a L1-based measurement report from the UE 120.

**Action 1404.** The DU transmits the mobility command such as a MAC CE based HO command to the UE 120, including the security token for the purpose of authorization of the network as the legitimate source of the mobility command such as a MAC CE based HO command.

**Action 1405.** The DU discards the security token, which should only be used once, i.e. for a single authorization. This Action may optionally be delayed until the DU has received (or detected) a confirmation that the UE 120 has received the mobility command such as the MAC CE based HO command and executed the mobility procedure such as the MAC CE based HO. E.g. this Action may optionally be performed after the subsequent Action).

**Action 1406.** The DU may await a confirmation that the UE 120 has executed the mobility procedure such as a MAC CE based HO.

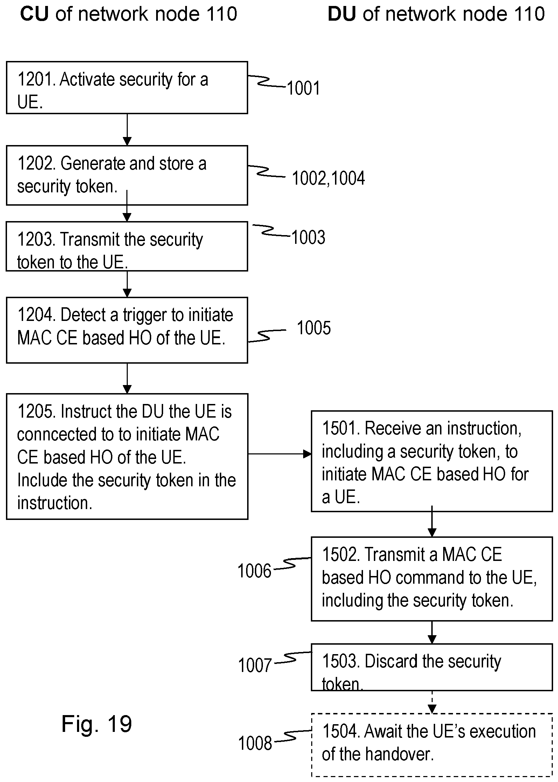

Method actions performed by the CU and DU in the network node 110 with split architecture according to one example embodiment, is shown in **Figure 19****.** In this embodiment variant the CU stores the generated security token and then detects the trigger for the mobility procedure such as a MAC CE based HO, which triggers it to transfer the security token to the DU with instruction to initiate the mobility command such as a MAC CE based HO command.

The following are the Actions performed by the CU according to the embodiment variant in Figure 19.

**Action 1201.** The CU activates security for the connected UE 120.

**Action 1202.** The CU generates and stores a security token to be used for authorization of the mobility procedure such as a MAC CE based HO towards the UE 120.

**Action 1203.** The CU transmits, via the DU, the security token to the UE 120 e.g. using ciphered and integrity protected signaling, for example using an RRCReconfiguration message. This Action may be seen as bootstrapping, or configuring, the UE 120 with the security parameter needed for a future authorization of the network.

**Action 1204.** The CU detects a trigger to initiate the mobility procedure such as a MAC CE based HO of the UE 120. The trigger may e.g. come in the form of an RRC-based measurement report from the UE 120.

**Action 1205.** The CU instructs the DU, to which the UE 120 is connected to initiate mobility procedure such as a MAC CE based HO of the UE 120. The CU includes the security token in the instruction to the DU.

The following are the Actions performed by the DU according to the embodiment variant in Figure 19.

**Action 1501.** The DU receives an instruction from the CU to initiate mobility procedure such as a MAC CE based HO of the UE 120. The DU also receives the security token as a part of this instruction.

**Action 1502.** The DU transmits a mobility command such as a MAC CE based HO command to the UE 120, including the security token for the purpose of authorization of the network as the legitimate source of the mobility command such as the MAC CE based HO command.

**Action 1503.** The DU discards the security token, which should only be used once, i.e. for a single authorization. This Action may optionally be delayed until the DU has received (or detected) a confirmation that the UE 120 has received the mobility command such as a MAC CE based HO command and executed the mobility procedure such as the MAC CE based HO. E.g. this Action may optionally be performed after the subsequent Action.

**Action 1504.** The DU may await a confirmation that the UE 120 has executed the mobility procedure such as the MAC CE based HO.

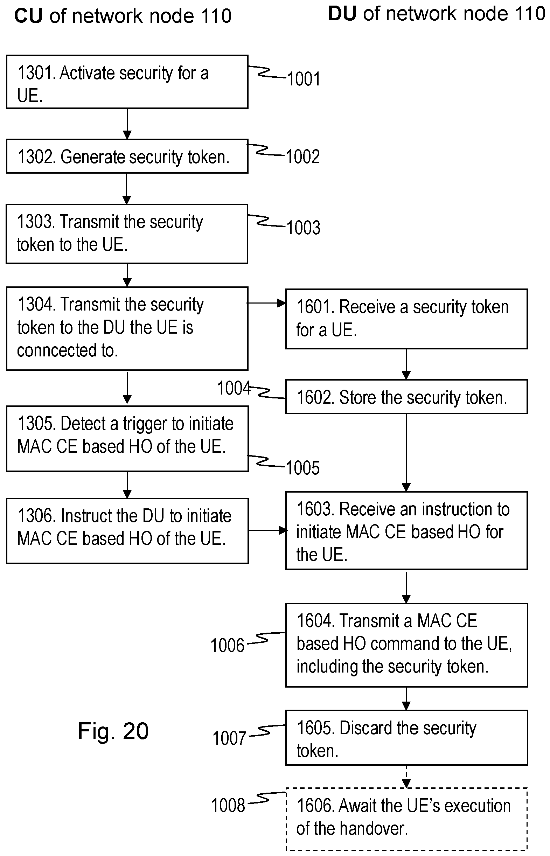

Method actions performed by the CU and DU in the network node 110 with split architecture according to one example embodiment, is shown in **Figure 20****.** In this embodiment variant the CU proactively transfers the security token to the DU, but still detects the trigger for the mobility procedure such as the MAC CE based HO. Detection of this trigger triggers the CU to instruct the DU to initiate the mobility procedure such as the MAC CE based HO.

The following are the Actions performed by the CU according to the embodiment variant in Figure 20.

**Action 1301.** The CU activates security for the connected UE 120.

**Action 1302.** The CU generates a security token to be used for authorization of the mobility procedure such as the MAC CE based HO towards the UE 120.

**Action 1303.** The CU transmits, via the DU, the security token to the UE 120 e.g. using ciphered and integrity protected signaling, for example by using an RRCReconfiguration message. This Action may be seen as bootstrapping, or configuring, the UE 120 with the security parameter needed for a future authorization of the network.

**Action 1304.** The CU proactively transmits the security token to the DU which the UE 120 is connected.

**Action 1305.** The CU detects a trigger to initiate the mobility procedure such as the MAC CE based HO of the UE 120. The trigger may e.g. come in the form of an RRC-based measurement report from the UE 120.

**Action 1306.** The CU instructs the DU, to which the UE 120 is connected, to initiate a mobility procedure such as a MAC CE based HO of the UE 120.

The following are the Actions performed by the DU according to the embodiment variant in Figure 20.

**Action 1601.** The DU receives the security token for a UE 120 from the CU.

**Action 1602.** The DU stores the received security token for potential later use. If the UE 120 would leave the DU before the security token has been used, the DU may discard the security token and the subsequent Actions are not performed.

**Action 1601.** The DU receives an instruction from the CU to initiate the mobility procedure such as the MAC CE based HO of a UE 120.

**Action 1602.** The DU transmits a mobility command such as a MAC CE based HO command to the UE 120, including the security token for the purpose of authorization of the network as the legitimate source of the mobility command such as a MAC CE based HO command.

**Action 1603.** The DU discards the security token, which should only be used once, i.e. for a single authorization. This Action may optionally be delayed until the DU has received (or detected) a confirmation that the UE 120 has received the mobility command such as a MAC CE based HO command and executed the mobility procedure such as the MAC CE based HO. E.g. this Action may optionally be performed after the subsequent Action.

**Action 1604.** The DU may await a confirmation that the UE 120 has executed the mobility procedure such as the MAC CE based HO.

Below, further embodiments for extensions and variations of the embodiments above will be described.

### Multiple security tokens

In some embodiments, the UE 120 obtains, is configured with or creates a set of security tokens, rather than with a single security token. i.e. the at least one security token may be multiple security tokens. Also here, each individual token may only be used once and it is removed by the UE 120 when it is used in a mobility command such as MAC CE HO command. In this alternative, the network node 110 may send multiple mobility commands such as MAC CE HO commands before configuring new security tokens in the UE 120. The configuration of security tokens in this alternative may associate an index to each individual security token in order to replace security tokens which have already been used by the network node 110. In this way, if a mobility command such as a MAC CE HO command is lost, any dangling token in the UE 120 will be replaced once the network node 110 configuring the security token with the index associated with this dangling security token.

In other words, and with more details, the network node 110 may provide the UE 120 with multiple security tokens to be stored. These multiple security tokens may be used for multiple subsequent authorizations, e.g. authorization of the authenticity of multiple mobility commands such as MAC CE handover commands. It should be noted that each security token shall preferably only be used once. As an example, the multiple security tokens may be used for multiple subsequent mobility procedures such as MAC CE based inter-cell and/or inter-beam handovers, where an intra-cell inter-beam handover may be referred to as a beam switch.

In an example scenario, different access nodes are responsible for the source cell and beam and/or the target cell and/or beam during a mobility procedure such as a MAC CE based handover. E.g., the source node may be the network node 110 providing the beam 115 and the target node may be the second network node 112 providing the beam 116. In this example scenario, the source node such as the network node 110 may transfer to the target node such as the second network node 112 the yet unused security tokens of the ones assigned to the UE 120. This transfer may take place across an inter-node interface, e.g. an Xn interface, or across one or more F1 interfaces. The transfer of the UE 120's yet unused security tokens may take place in conjunction with the mobility procedure such as MAC CE based handover or after the mobility procedure such as the MAC CE based handover, e.g. when the mobility procedure such as the MAC CE based handover has been completed.

The multiple security tokens may all be transferred to the UE 120 in the same message, e.g. an RRCReconfiguration message or they may be transferred in separate messages. For example, the network may provide the UE 120 with N security tokens in a first RRCReconfiguration message and may subsequently/later, at another point in time, transfer an additional M security tokens to the UE 120 in a second RRCReconfiguration message. The UE 120 would store all received security tokens and would thus have N+M stored security tokens after receiving the two RRCreconfiguration messages. N and M are integers > 0.

As one option, an RRCReconfiguration message containing one or more security token(s) for the UE 120 to store may optionally contain an indication of whether previously stored security tokens should be maintained or discarded. This indication may be a "binary", "discard"and/or "maintain" indication or it may be an indication of the maximum number of security tokens the UE 120 should store. If such an indication results in that a subset of the UE 120's stored security tokens are discarded, then the UE 120 may e.g. discard the security tokens in order of age, i.e. the oldest is/are discarded first. Among security tokens with the same age, e.g. security tokens received in the same RRCReconfiguration message, the UE 120 may e.g. discard them in the order they were included in the message in which they were received, i.e. the first security token in the message is discarded first. That may be, among the security tokens received in the same message, the UE 120 regards the one contained first in the message as the oldest.

When receiving a security token for the purpose of authorization, the UE 120 may validate it against the oldest of its stored security tokens, i.e. checks if they are equal. As another option, the UE 120 may accept the received authorizing security token if it is equal to any one of the UE 120's stored security tokens.

As one option, the UE 120 stores the security tokens in a list, at least conceptually, such as an "AddMod..." type of list, e.g. a SecurityTokenToAddModList or a SecurityTokenList or a VarSecurityTokenList, and the network node 110 may transfer additional security tokens and instruct the UE 120 to add them to the list, e.g. in a SecurityTokenToAddModList IE in an RRCReconfiguration message. In this transfer, each of the transferred security tokens may be associated with an index or identifier to be stored by the UE 120 together with the security token. The network node 110 would also be able to instruct the UE 120 to discard certain security token(s) from the list, e.g. by referring to the index(es) or identifier(s) of the security token(s) to be discarded, e.g. using a SecurityTokenToRemoveList IE or a SecurityTokenldToRemoveList IE in an RRCReconfiguration message.

### Alternative ways to obtain/derive/calculate the security token

In another alternative, the value of the security token may be calculated by the UE 120 using a shared secret and a counter. For each received mobility command such as MAC CE HO command, the UE 120 increases the counter and calculates a new security token. This avoids completely the need for configuring the security token. On the other hand, it may need using a Universal Subscriber Identity Module (USIM) and/or Universal Integrated Circuit Card (UICC) application for the calculation of the security token since typically the shared secret is stored in the USIM and/or UICC. Also, if a mobility command such as a MAC CE command is lost the counters in the network node 110 and the UE 120 may become out of sync.

In yet another alternative, the security token is calculated using a shared secret, a counter and also using the content of the mobility command such as the MAC CE command as input.

### Failure handling

If the UE 120 does not execute the handover, the network node 110 cannot know for sure whether the UE 120 received and thus used the security token for authorization in the mobility command such as the MAC CE handover command. To be sure not to reuse a security token that the UE 120 perceives as invalid, the network node 110 may reconfigure the UE 120 with a new security token before a possible re-initiation of a mobility procedure such as a MAC CE based HO, i.e. before transmitting another mobility command such as a MAC CE with a HO command to the UE 120.

In another embodiment, when there is an authorization failure, i.e. when the security token in a mobility command, such as a MAC CE HO command, does not match a stored security token in the UE 120, the UE 120 may enter RRC_IDLE state. The UE 120 may also log the event for later failure reporting to the network such as the network node 110.

In yet another embodiment, in case of authorization failure, i.e. when the security token in the mobility command, such as the MAC CE HO command, does not match a stored security token in the UE 120, the UE 120 ignores the received mobility command such as MAC CE HO command. The UE 120 may report the event to the network and/or may log the event for later failure reporting to the network. As one alternative, the UE 120 may keep the stored security token for a future authorization. As another alternative, the UE 120 may discard the stored security token.

### Using the security token for authorization at the target node

In an extension of the security token based method for authorization of the mobility command such as the MAC CE HO command, the security token may also be used for authorization of the mobility procedure, such as the MAC CE based handover, at the target node, e.g. the second network node 112. In some embodiments of this extension, the UE 120 transfers the security token to the target node in conjunction with the mobility procedure such as the MAC CE based handover. The target node requests the source node e.g. the network node 110, to verify the security token. This may involve transfer of the security token over an inter-node interface and may involve a response, e.g. including a configuration of successful authorization, or an indication of unsuccessful authorization, transferred over an inter-node interface.

In some embodiments the security token is accompanied with information that identifies the UE 120. In other embodiments the security token is accompanied with information that identifies the UE 120's context at the source node such as the network node 110, where the UE 120's context is a record of data e.g. comprising configuration information, state information and/or identification information. In yet other embodiments the security token is accompanied by a UE 120 identifier and information that identifies the UE 120's context at the source node such as the network node 110.

In some embodiments, this extension is used when the source node such as the network node 110 and the target node such as the second network node 112 are different nodes, e.g. different gNBs.

In some embodiments, this extension is used when the source node and the target nodes are different CUs, e.g. different CUs in the network node 110.

In some embodiments, this extension is used when the source node and the target nodes are different DUs, e.g. different DUs in the network node 110.

In some embodiments, this extension is used when the source node and the target nodes are different DUs connected to the same CU, e.g. in the network node 110, or in different network nodes such as in the network node 110 and the second network node 112.

In some embodiments, this extension is used when the source node and the target nodes are different DUs connected to different CUs, e.g. in the network node 110, or in different network nodes such as in the network node 110 and the second network node 112.

In some embodiments, this extension is used when the source node and the target nodes are the same node, e.g. in the network node 110.

In some embodiments, this extension is used when the source node and the target nodes are different entities in the same node such as the network node 110, e.g. implemented using different hardware, such as different hardware boards or blades with different processors.

In some embodiments, this extension is used when the source node and the target nodes are different software entities in the same node, such as the network node 110, e.g. implemented using different virtual machines, different processes, different instantiations of software modules, or other types of virtualized entities.

With this extension, the source node such as the network node 110 may extend the storage of a security token for the purpose of authorization at the source, e.g. extend the storage beyond the point where it should otherwise have discarded the security token, e.g. after it has sent it to a UE 120 in a mobility command such as a MAC CE HO command. For instance, the CU of the network node 110, may store the security token even if has proactively transferred it to the DU of the network node 110. And the CU would not discard the security token before the mobility procedure, such as the HO, is confirmed and the CU has verified it.

If the target node fails to authorize the mobility procedure such as the MAC CE based HO, it may reject the mobility procedure such as the MAC CE based HO and may disconnect and/or release the UE 120.

A brief example embodiment comprises a method in the UE 120, to provide integrity of lower layer mobility commands, by:
- Receiving a first security token from the network node 110 and storing the said token,
- Receiving a lower layer handover command including a second security token,
- Performing an authorization check of the lower layer handover command, using the second security token and the stored first token.

Upon successful authorization check, perform handover as instructed by the received handover command.

Another brief example embodiment comprises a method in the network node 110, to provide integrity of lower layer handover commands, by:
Generating a security token
Transmitting said security token to a UE 120
Transmitting a lower layer handover command to said UE 120 including said security token.

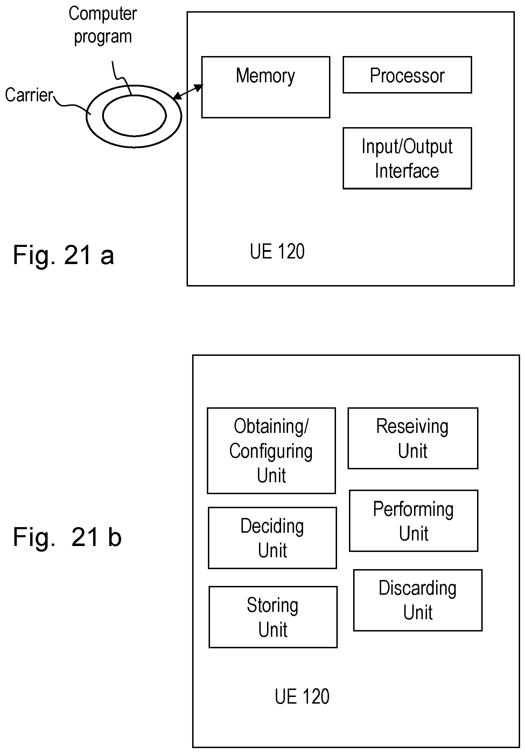

**Figure 21a** and **21b** shows an example of arrangements in the UE 120.

The UE 120 may comprise **an input and output interface** configured to communicate with each other. The input and output interface may comprise a wireless receiver (not shown) and a wireless transmitter (not shown).

The UE 120 may comprise an **obtaining/ configuring unit, receiving unit,** a **deciding unit,** a **storing unit,** a **discarding unit,** and a **performing unit** to perform the method actions as described herein.

The embodiments herein may be implemented through a respective processor or one or more processors, such as the **processor** of a processing circuitry in the UE 120 depicted in Figure 21a, together with respective computer program code for performing the functions and actions of the embodiments herein. The program code mentioned above may also be provided as a computer program product, for instance in the form of a data carrier carrying computer program code for performing the embodiments herein when being loaded into the UE 120. One such carrier may be in the form of a CD ROM disc. It is however feasible with other data carriers such as a memory stick. The computer program code may furthermore be provided as pure program code on a server and downloaded to the UE 120.

The UE 120 may further comprise respective a **memory** comprising one or more memory units. The memory comprises instructions executable by the processor in the UE 120. The memory is arranged to be used to store security tokens, instructions, data, configurations, and applications to perform the methods herein when being executed in the UE 120.

In some embodiments, a **computer program** comprises instructions, which when executed by the at least one processor, cause the at least one processor of the UE 120 to perform the actions above.

In some embodiments, a respective **carrier** comprises the respective computer program, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the functional units in the UE 120, described below may refer to a combination of analog and digital circuits, and/or one or more processors configured with software and/or firmware, e.g. stored in the UE 120, that when executed by the respective one or more processors such as the processors described above cause the respective at least one processor to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

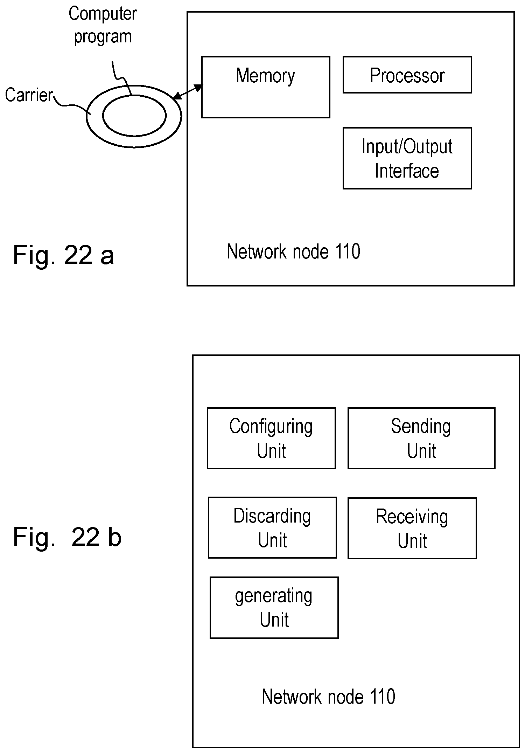

**Figure 22a** and **22b** shows an example of arrangements in the network node 110.

The network node 110 may comprise **an input and output interface** configured to communicate with each other. The input and output interface may comprise a wireless receiver (not shown) and a wireless transmitter (not shown).

The network node 110 may comprise a **configuring unit,** a **discarding unit,** a **sending unit,** a **generating unit** and a **receiving unit** to perform the method actions as described herein.

The embodiments herein may be implemented through a respective processor or one or more processors, such as the **processor** of a processing circuitry in the network node 110 depicted in Figure 22a, together with respective computer program code for performing the functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise respective a **memory** comprising one or more memory units. The memory comprises instructions executable by the processor in the network node 110. The memory is arranged to be used to store security tokens, instructions, data, configurations, and applications to perform the methods herein when being executed in the network node 110.

In some embodiments, a **computer program** comprises instructions, which when executed by the at least one processor, cause the at least one processor of the network node 110 to perform the actions above.

In some embodiments, a respective **carrier** comprises the respective computer program, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the functional units in the network node 110, described below may refer to a combination of analog and digital circuits, and/or one or more processors configured with software and/or firmware, e.g. stored in the network node 110, that when executed by the respective one or more processors such as the processors described above cause the respective at least one processor to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

### Further Extensions and Variations

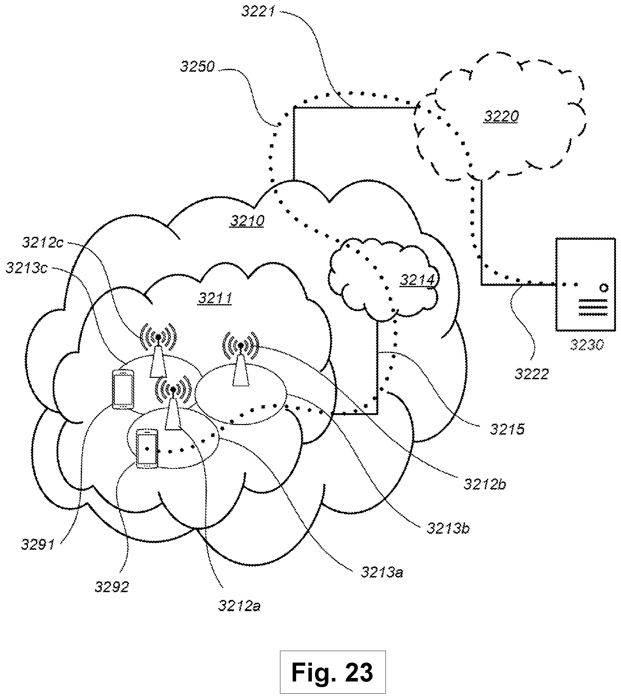

With reference to **Figure 23****,** in accordance with an embodiment, a communication system includes a telecommunication network 3210 such as the wireless communications network 100, e.g. an loT network, or a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the UE 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 10 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

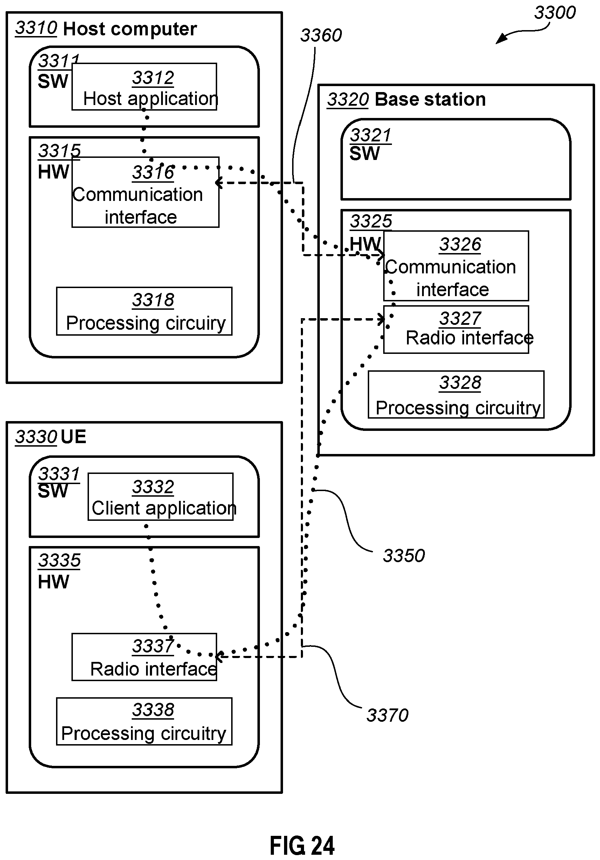

Example implementations, in accordance with an embodiment, of the UE, base station and host computer discussed in the preceding paragraphs will now be described with reference to **Figure 24****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 24) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

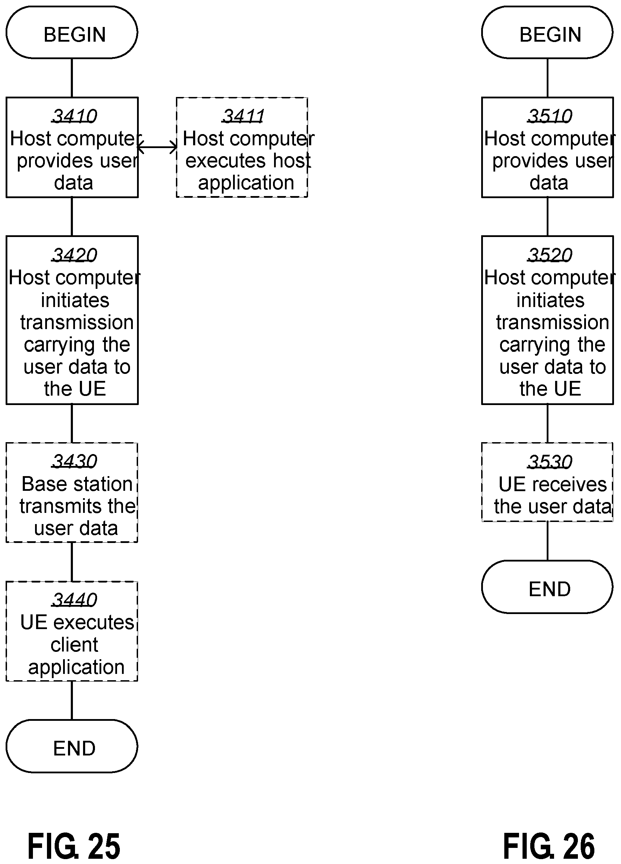

It is noted that the host computer 3310, base station 3320 and UE 3330 illustrated in Figure 24 may be identical to the host computer 3230, one of the base stations 3212a, 3212b, 3212c and one of the UEs 3291, 3292 of Figure 25, respectively. This is to say, the inner workings of these entities may be as shown in Figure 24 and independently, the surrounding network topology may be that of Figure 23.

In Figure 24, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable **RAN** effect: data rate, latency, power consumption, and thereby provide benefits such as corresponding effect on the **OTT service:** e.g. reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

**Figure 25** is a flowchart illustrating a method implemented in a communication system, in accordance with one embodiment. The communication system includes a host computer, a base station such as the network node 110, and a UE such as the UE 120, which may be those described with reference to Figure 23 and Figure 24. For simplicity of the present disclosure, only drawing references to Figure 25 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 26** is a flowchart illustrating a method implemented in a communication system, in accordance with one embodiment. The communication system includes a host computer, a base station such as a AP STA, and a UE such as a Non-AP STA which may be those described with reference to Figure 23 and Figure 24. For simplicity of the present disclosure, only drawing references to Figure 26 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

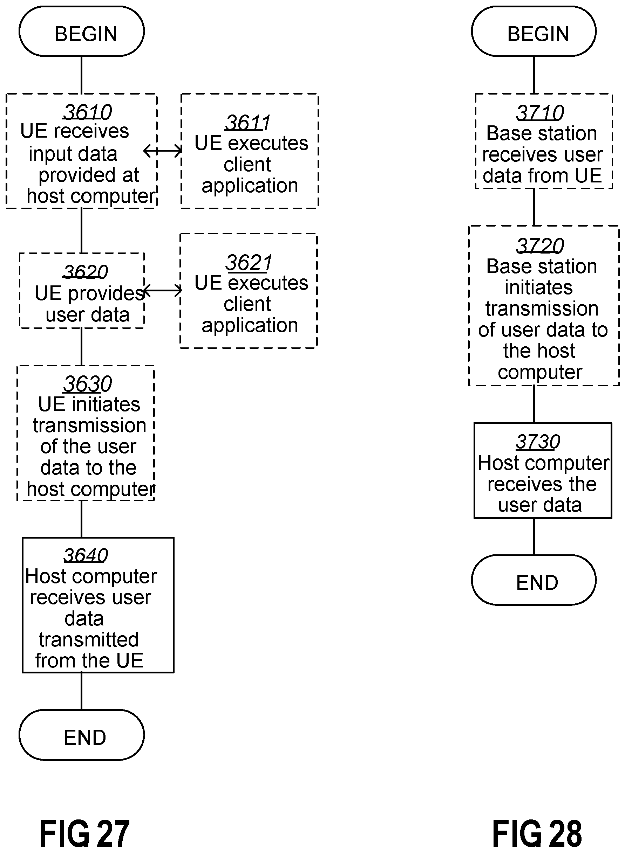

**Figure 27** is a flowchart illustrating a method implemented in a communication system, in accordance with one embodiment. The communication system includes a host computer, a base station such as a AP STA, and a UE such as a Non-AP STA which may be those described with reference to Figure 23 and Figure 24. For simplicity of the present disclosure, only drawing references to Figure 27 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 28** is a flowchart illustrating a method implemented in a communication system, in accordance with one embodiment. The communication system includes a host computer, a base station such as a AP STA, and a UE such as a Non-AP STA which may be those described with reference to Figure 23 and Figure 24. For simplicity of the present disclosure, only drawing references to Figure 28 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

## Claims

1. A method performed by a User Equipment, UE, (120) for handling authorization in relation to a mobility procedure in a wireless communications network (100), the method comprising:
*obtaining* (901) at least one security token,
*receiving* (903) from a network node (110) in the wireless communications network (100), a mobility command for the mobility procedure, which mobility command comprises a security token, and which mobility command relates to a protocol layer below a Radio Resource Control, RRC, protocol,
*deciding* (904) whether or not the mobility command is authorized, based on comparing the security token in the mobility command with the at least one obtained security token.

2. The method according to claim 1, further comprising:
when decided that the mobility command is authorized, *performing* (905) mobility as instructed by the received mobility command.

3. The method according to any of the claims 1-2, wherein:
*obtaining* (901) at least one security token comprises obtaining multiple security tokens, and wherein
the *deciding* (904) whether or not the mobility command is authorized is based on comparing the security token in the mobility command with the obtained multiple security tokens to see whether or not the security token in the mobility command corresponds to any of the obtained multiple security tokens.

4. The method according to claim 3, further comprising:
*storing* (902) each of the multiple security tokens, and wherein
when the security token in the mobility command corresponds to a specific security token out of the obtained multiple security tokens, *discarding* (906) said stored specific security token.

5. The method according to claim 3 when depending on claim 2, further comprising:
*receiving* (906) from a target network node serving the target cell, information about which previously stored security tokens out of the obtained multiple security tokens shall be maintained and which shall be discarded.

6. A method performed by a network node (110), for handling authorization in relation to a mobility procedure of a User Equipment, UE, (120), in a wireless communications network (100), the method comprising:
*configuring* (1003) the UE (120) with at least one security token,
*sending* (1006) to the UE (120), a mobility command for the mobility procedure, which mobility command relates to a protocol layer below Radio Resource Control, RRC, protocol, and which mobility command comprises one of the at least one security token,
enabling the UE (120) to decide whether or not the mobility command is authorized, based on comparing the security token in the mobility command with the at least one obtained security token.

7. The method according to claim 6, further comprising:
*discarding* (1007) the one of the at least one security token.

8. The method according to any of the claims 6-7, further comprising:
when the UE (120) has decided that the lower layer mobility command is authorized, *receiving* (1008) from the UE (120) a confirmation that the UE (120) has executed the mobility as instructed by the mobility command.

9. The method according to any of the claims 6-8, further comprising:
*generating* (1002) at least one security token, and
*storing* (1004) the at least one security token.

10. The method according to any of the claims 6-9, wherein:
*generating* (1002) at least one security token comprises generating multiple security tokens, and storing (1004) each of the multiple security tokens,
*configuring* (1003) the UE (120) with at least one security token comprises configuring the UE (120) with multiple security tokens, and
wherein enabling the UE (120) to decide whether or not the mobility command is authorized, is based on comparing the security token in the mobility command with the obtained multiple security tokens to see whether or not the security token in the mobility command corresponds to any of the obtained multiple security tokens.

11. The method according to any of the claims 9-10, wherein:
when the security token in the handover has been sent to the UE (120), *discarding* (1007) the stored security token that has been sent.

12. The method according to any of the claims 8-11, further comprising:
when the UE (120) has decided that the lower layer mobility command is authorized, *sending* (1009) to a target network node serving the target cell, information about which security tokens out of the obtained multiple security tokens that shall be maintained and which shall be discarded.

13. A User Equipment, UE, (120), configured to handle authorization in relation to a mobility procedure in a wireless communications network (100), the UE (120) being configured to:
*configure* the UE (120) with at least one security token,
*receive* from a network node (110) in the wireless communications network (100), a mobility command for the mobility procedure, which mobility command comprises a security token, which mobility command relates to a protocol layer below Radio Resource Control, RRC, protocol,
*decide* whether or not the mobility command is authorized, based on comparing the security token in the mobility command with the at least one obtained security token.

14. The UE (120) according to claim 13, further being configured to:
perform the method steps according to any of the claims 2-5.

15. A network node (110), configured to handle authorization in relation to a mobility procedure of a User Equipment, UE, (120), in a wireless communications network (100), the network node (110) further being configured to:
*configure* the UE (120) with at least one security token,
*send* to the UE (120), a mobility command, for the mobility to be from the source cell to the target cell, which mobility command is adapted to relate to a protocol layer below Radio Resource Control, RRC, protocol and which mobility command comprises one of the at least one security token,
*enable* the UE (120) to decide whether or not the mobility command is to be authorized, based on comparing the security token in the mobility command with the at least one obtained security token.

16. The network node (110) according to claim 15, further being configured to:
perform the method steps according to any of the claims 7-12.

## Patentansprüche

1. Verfahren, das durch eine Benutzereinrichtung, UE, (120), durchgeführt wird, zum Handhaben einer Autorisierung in Bezug auf eine Mobilitätsprozedur in einem Drahtloskommunikationsnetzwerk (100), das Verfahren umfassend:
*Erhalten* (901) mindestens eines Sicherheitstokens,
*Empfangen* (903), von einem Netzwerkknoten (110) in dem Drahtloskommunikationsnetzwerk (100), eines Mobilitätsbefehls für die Mobilitätsprozedur, wobei der Mobilitätsbefehl ein Sicherheitstoken umfasst und der Mobilitätsbefehl sich auf eine Protokollschicht unterhalb eines Funkressourcensteuerungsprotokolls, RRC-Protokoll, bezieht,
*Entscheiden* (904), ob der Mobilitätsbefehl autorisiert ist oder nicht, basierend auf einem Vergleichen des Sicherheitstokens in dem Mobilitätsbefehl mit dem mindestens einen erhaltenen Sicherheitstoken.

2. Verfahren nach Anspruch 1, ferner umfassend:
wenn entschieden wird, dass der Mobilitätsbefehl autorisiert ist, *Durchführen* (905) der Mobilität gemäß der Anweisung des empfangenen Mobilitätsbefehls.

3. Verfahren nach einem der Ansprüche 1 bis 2, wobei:
das *Erhalten* (901) mindestens eines Sicherheitstokens das Erhalten mehrerer Sicherheitstoken umfasst, und wobei
das *Entscheiden* (904), ob der Mobilitätsbefehl autorisiert ist oder nicht, auf dem Vergleichen des Sicherheitstokens in dem Mobilitätsbefehl mit den erhaltenen mehreren Sicherheitstoken basiert, um zu sehen, ob das Sicherheitstoken in dem Mobilitätsbefehl einem beliebigen der erhaltenen mehreren Sicherheitstoken entspricht.

4. Verfahren nach Anspruch 3, ferner umfassend:
*Speichern* (902) jedes der mehreren Sicherheitstoken, und wobei
wenn das Sicherheitstoken in dem Mobilitätsbefehl einem spezifischen Sicherheitstoken aus den erhaltenen mehreren Sicherheitstoken entspricht, *Verwerfen* (906) des gespeicherten spezifischen Sicherheitstokens.

5. Verfahren nach Anspruch 3, wenn abhängig von Anspruch 2, ferner umfassend:
*Empfangen* (906) von einem Zielnetzwerkknoten, der die Zielzelle bedient, von Informationen darüber, welche zuvor gespeicherten Sicherheitstoken aus den erhaltenen mehreren Sicherheitstoken beibehalten werden sollen und welche verworfen werden sollen.

6. Verfahren, das durch einen Netzwerkknoten (110) durchgeführt wird, zum Handhaben der Autorisierung in Bezug auf eine Mobilitätsprozedur einer Benutzereinrichtung, UE, (120), in einem Drahtloskommunikationsnetzwerk (100), das Verfahren umfassend:
*Konfigurieren* (1003) der UE (120) mit mindestens einem Sicherheitstoken,
*Senden* (1006), an die UE (120), eines Mobilitätsbefehls für die Mobilitätsprozedur, wobei der Mobilitätsbefehl sich auf eine Protokollschicht unterhalb des Funkressourcensteuerungsprotokolls, RRC-Protokoll, bezieht und wobei der Mobilitätsbefehl einen der mindestens einen Sicherheitstoken umfasst,
Ermöglichen, dass die UE (120) entscheidet, ob der Mobilitätsbefehl autorisiert ist oder nicht, basierend auf dem Vergleichen des Sicherheitstokens in dem Mobilitätsbefehl mit dem mindestens einen erhaltenen Sicherheitstoken.

7. Verfahren nach Anspruch 6, ferner umfassend:
*Verwerfen* (1007) des einen des mindestens einen Sicherheitstokens.

8. Verfahren nach einem der Ansprüche 6 bis 7, ferner umfassend:
wenn die UE (120) entschieden hat, dass der Mobilitätsbefehl der unteren Schicht autorisiert ist, *Empfangen* (1008), von der UE (120), einer Bestätigung, dass die UE (120) die Mobilität gemäß der Anweisung des Mobilitätsbefehl ausgeführt hat.

9. Verfahren nach einem der Ansprüche 6 bis 8, ferner umfassend:
*Erzeugen* (1002) mindestens eines Sicherheitstokens und
*Speichern* (1004) des mindestens einen Sicherheitstokens.

10. Verfahren nach einem der Ansprüche 6 bis 9, wobei:
das *Erzeugen* (1002) mindestens eines Sicherheitstokens das Erzeugen mehrerer Sicherheitstoken und das Speichern (1004) jedes der mehreren Sicherheitstoken umfasst,
das *Konfigurieren* (1003) der UE (120) mit mindestens einem Sicherheitstoken das Konfigurieren der UE (120) mit mehreren Sicherheitstoken umfasst, und
wobei das Ermöglichen, dass die UE (120) entscheidet, ob der Mobilitätsbefehl autorisiert ist oder nicht, auf dem Vergleichen des Sicherheitstokens in dem Mobilitätsbefehl mit den erhaltenen mehreren Sicherheitstoken basiert, um zu sehen, ob das Sicherheitstoken in dem Mobilitätsbefehl einem beliebigen der erhaltenen mehreren Sicherheitstoken entspricht.

11. Verfahren nach einem der Ansprüche 9 bis 10, wobei:
wenn das Sicherheitstoken bei der Übergabe an die UE (120) gesendet wurde, *Verwerfen* (1007) des gespeicherten Sicherheitstokens, das gesendet wurde.

12. Verfahren nach einem der Ansprüche 8 bis 11, ferner umfassend:
wenn die UE (120) entschieden hat, dass der Mobilitätsbefehl der unteren Schicht autorisiert ist, *Senden* (1009), an einen Zielnetzwerkknoten, der die Zielzelle bedient, von Informationen darüber, welche Sicherheitstokens aus den erhaltenen mehreren Sicherheitstokens beibehalten werden sollen und welche verworfen werden sollen.

13. Benutzereinrichtung, UE (120), die konfiguriert ist, um die Autorisierung in Bezug auf eine Mobilitätsprozedur in einem Drahtloskommunikationsnetzwerk (100) zu handhaben, wobei die UE (120) konfiguriert ist zum:
*Konfigurieren* der UE *(120)* mit mindestens einem Sicherheitstoken,
*Empfangen,* von einem Netzwerkknoten (110) in dem Drahtloskommunikationsnetzwerk (100), eines Mobilitätsbefehls für die Mobilitätsprozedur, wobei der Mobilitätsbefehl ein Sicherheitstoken umfasst, wobei sich der Mobilitätsbefehl auf eine Protokollschicht unterhalb des Funkressourcensteuerungsprotokolls, RRC-Protokoll, bezieht,
*Entscheiden,* ob der Mobilitätsbefehl autorisiert ist oder nicht, basierend auf dem Vergleichen des Sicherheitstokens in dem Mobilitätsbefehl mit dem mindestens einen erhaltenen Sicherheitstoken.

14. UE (120) nach Anspruch 13, die ferner konfiguriert ist zum:
Durchführen der Verfahrensschritte nach einem der Ansprüche 2 bis 5.

15. Netzwerkknoten (110), der konfiguriert ist, um die Autorisierung in Bezug auf eine Mobilitätsprozedur einer Benutzereinrichtung, UE, (120) in einem Drahtloskommunikationsnetzwerk (100) zu handhaben, wobei der Netzwerkknoten (110) ferner konfiguriert ist zum:
*Konfigurieren* der UE (120) mit mindestens einem Sicherheitstoken,
*Senden,* an die UE (120), eines Mobilitätsbefehls, damit die Mobilität von der Quellzelle zu der Zielzelle erfolgt, wobei der Mobilitätsbefehl angepasst ist, um sich auf eine Protokollschicht unterhalb des Funkressourcensteuerungsprotokolls, RRC-Protokoll, zu beziehen, und wobei der Mobilitätsbefehl einen der mindestens einen Sicherheitstoken umfasst,
*Ermöglichen,* dass die UE (120) entscheidet, ob der Mobilitätsbefehl autorisiert werden soll oder nicht, basierend auf dem Vergleich des Sicherheitstokens in dem Mobilitätsbefehl mit dem mindestens einen erhaltenen Sicherheitstoken.

16. Netzwerkknoten (110) nach Anspruch 15, der ferner konfiguriert ist zum:
Durchführen der Verfahrensschritte nach einem der Ansprüche 7 bis 12.

## Revendications

1. Procédé réalisé par un équipement utilisateur, UE (120), permettant de gérer une autorisation en relation avec une procédure de mobilité dans un réseau de communications sans fil (100), le procédé comprenant :
*l'obtention* (901) d'au moins un jeton de sécurité,
*la réception* (903) en provenance d'un noeud de réseau (110) dans le réseau de communications sans fil (100), d'une instruction de mobilité pour la procédure de mobilité, l'instruction de mobilité comprend un jeton de sécurité, et l'instruction de mobilité se rapporte à une couche de protocole sous un protocole de commande de ressource radio, RRC,
*la décision* (904) du fait de savoir si oui ou non l'instruction de mobilité est autorisée, sur la base de la comparaison du jeton de sécurité dans l'instruction de mobilité avec l'au moins un jeton de sécurité obtenu.

2. Procédé selon la revendication 1, comprenant en outre :
lorsqu'il est décidé que l'instruction de mobilité est autorisée, la *réalisation* (905) d'une mobilité conformément à l'instruction de mobilité reçue.

3. Procédé selon l'une quelconque des revendications 1 à 2, dans lequel :
*l'obtention* (901) d'au moins un jeton de sécurité comprend l'obtention de multiples jetons de sécurité, et dans lequel
*la décision* (904) du fait de savoir si oui ou non l'instruction de mobilité est autorisée est basée sur la comparaison du jeton de sécurité dans l'instruction de mobilité avec les multiples jetons de sécurité afin de déterminer si oui ou non le jeton de sécurité dans l'instruction de mobilité correspond à l'un quelconque des multiples jetons de sécurité.

4. Procédé selon la revendication 3, comprenant en outre :
*le stockage* (902) de chacun des multiples jetons de sécurité, et dans lequel
lorsque le jeton de sécurité dans l'instruction de mobilité correspond à un jeton de sécurité spécifique parmi les multiples jetons de sécurité obtenus, le *rejet* (906) dudit jeton de sécurité spécifique stocké.

5. Procédé selon la revendication 3 lorsqu'elle dépend de la revendication 2, comprenant en outre :
*la réception* (906) en provenance d'un noeud de réseau cible desservant la cellule cible, d'informations concernant les jetons de sécurité précédemment stockés parmi les multiples jetons de sécurité obtenus qui doivent être conservés et ceux qui doivent être rejetés.

6. Procédé réalisé par un noeud de réseau (110) permettant de gérer une autorisation en relation avec une procédure de mobilité d'un équipement utilisateur, UE, (120), dans un réseau de communications sans fil (100), le procédé comprenant :
*la configuration* (1003) de l'UE (120) avec au moins un jeton de sécurité,
*l'envoi* (1006) à l'UE (120), d'une instruction de mobilité pour la procédure de mobilité, l'instruction de mobilité se rapporte à une couche de protocole sous un protocole de commande de ressource radio, RRC, et l'instruction de mobilité comprend un de l'au moins un jeton de sécurité,
le fait de permettre à l'UE (120) de décider si oui ou non l'instruction de mobilité est autorisée, sur la base de la comparaison du jeton de sécurité dans l'instruction de mobilité avec l'au moins un jeton de sécurité obtenu.

7. Procédé selon la revendication 6, comprenant en outre :
le *rejet* (1007) de l'un de l'au moins un jeton de sécurité.

8. Procédé selon l'une quelconque des revendications 6 à 7, comprenant en outre :
lorsque l'UE (120) a décidé que l'instruction de mobilité de couche inférieure est autorisée, *la réception* (1008) en provenance de l'UE (120) d'une confirmation selon laquelle l'UE (120) a exécuté la mobilité conformément à l'instruction de mobilité.

9. Procédé selon l'une quelconque des revendications 6 à 8, comprenant en outre :
*la génération* (1002) d'au moins un jeton de sécurité, et
*le stockage* (1004) de l'au moins un jeton de sécurité.

10. Procédé selon l'une quelconque des revendications 6 à 9, dans lequel :
*la génération* (1002) d'au moins un jeton de sécurité comprend la génération de multiples jetons de sécurité, et le stockage (1004) de chacun des multiples jetons de sécurité,
*la configuration* (1003) de l'UE (120) avec au moins un jeton de sécurité comprend la configuration de l'UE (120) avec de multiples jetons de sécurité, et
dans lequel le fait de permettre à l'UE (120) de décider si oui ou non l'instruction de mobilité est autorisée, est basé sur la comparaison du jeton de sécurité dans l'instruction de mobilité avec les multiples jetons de sécurité obtenus afin de déterminer si oui ou non le jeton de sécurité dans l'instruction de mobilité correspond à l'un quelconque des multiples jetons de sécurité obtenus.

11. Procédé selon l'une quelconque des revendications 9 à 10, dans lequel :
lorsque le jeton de sécurité dans le transfert intercellulaire a été envoyé à l'UE (120), rejeter (1007) le jeton de sécurité stocké qui a été envoyé.

12. Procédé selon l'une quelconque des revendications 8 à 11, comprenant en outre :
lorsque l'UE (120) a décidé que l'instruction de mobilité de couche inférieure est autorisée, *l'envoi* (1009) à un noeud de réseau cible desservant la cellule cible, d'informations concernant les jetons de sécurité parmi les multiples jetons de sécurité obtenus qui doivent être conservés et ceux qui doivent être rejetés.

13. Équipement utilisateur, UE, (120), configuré pour gérer une autorisation en relation avec une procédure de mobilité dans un réseau de communications sans fil (100), l'UE (120) étant configuré pour :
*configurer* l'UE (120) avec au moins un jeton de sécurité,
*recevoir* en provenance d'un noeud de réseau (110) dans le réseau de communications sans fil (100), une instruction de mobilité pour la procédure de mobilité, l'instruction de mobilité comprend un jeton de sécurité, l'instruction de mobilité se rapporte à une couche de protocole sous un protocole de commande de ressource radio, RRC,
*décider* si oui ou non l'instruction de mobilité est autorisée, sur la base de la comparaison du jeton de sécurité dans l'instruction de mobilité avec l'au moins un jeton de sécurité obtenu.

14. UE (120) selon la revendication 13, étant en outre configuré pour :
réaliser les étapes de procédé selon l'une quelconque des revendications 2 à 5.

15. Noeud de réseau (110), configuré pour gérer une autorisation en relation avec une procédure de mobilité d'un équipement utilisateur, UE (120), dans un réseau de communications sans fil (100), le noeud de réseau (110) étant en outre configuré pour :
*configurer* l'UE (120) avec au moins un jeton de sécurité,
*envoyer* à l'UE (120), une instruction de mobilité, pour que la mobilité s'effectue de la cellule source à la cellule cible, l'instruction de mobilité est adaptée à se rapporter à une couche de protocole sous un protocole de commande de ressource radio, RRC, et l'instruction de mobilité comprend un de l'au moins un jeton de sécurité,
*permettre* à l'UE (120) de décider si oui ou non l'instruction de mobilité doit être autoriser, sur la base de la comparaison du jeton de sécurité dans l'instruction de mobilité avec l'au moins un jeton de sécurité obtenu.

16. Noeud de réseau (110) selon la revendication 15, étant en outre configuré pour :
réaliser les étapes de procédé selon l'une quelconque des revendications 7 à 12.
